(19) Europäisches Patentamt
European Patent Office
Office européen des brevets

(11) EP 2 996 794 B1

(12) EUROPÄISCHE PATENTSCHRIFT

(45) Veröffentlichungstag und Bekanntmachung des Hinweises auf die Patenterteilung:
**26.09.2018 Patentblatt 2018/39**

(21) Anmeldenummer: **14719763.6**

(22) Anmeldetag: **28.04.2014**

(51) Int Cl.:
***B01D 53/22*** *(2006.01)* ***B01D 53/30*** *(2006.01)*
***C10L 3/10*** *(2006.01)*

(86) Internationale Anmeldenummer:
**PCT/EP2014/058535**

(87) Internationale Veröffentlichungsnummer:
**WO 2014/183977 (20.11.2014 Gazette 2014/47)**

# (54) STEUERUNG DER GASZUSAMMENSETZUNG EINER GASSEPARATIONSANLAGE MIT MEMBRANEN

CONTROL OF THE GAS COMPOSITION OF A GAS SEPARATING PLANT WITH MEMBRANES

RÉGLAGE DE COMPOSITION DE GAZ D'UNE INSTALLATION DE SÉPARATION DE GAZ AVEC MEMBRANES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2013 EP 13167865**

(43) Veröffentlichungstag der Anmeldung:
**23.03.2016 Patentblatt 2016/12**

(73) Patentinhaber: **Evonik Fibres GmbH**
**4861 Schörfling am Attersee (AT)**

(72) Erfinder:
- **SCHOLZ, Marco**
**44329 Dortmund (DE)**
- **WESSLING, Matthias**
**52074 Aachen (DE)**

(74) Vertreter: **Thiele, Georg Friedrich et al**
**Evonik Industries AG**
**CI-IPM-PAT**
**Postcode 84/339**
**Rodenbacher Chausee 4**
**63457 Hanau (DE)**

(56) Entgegenhaltungen:
**WO-A1-2012/000727 US-A1- 2007 125 537**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 996 794 B1

**Beschreibung**

Die vorliegende Erfindung betrifft ein Verfahren zur Steuerung einer Gasseparationsanlage, eine derart gesteuerte Anlage sowie deren Verwendung zur Separation von Gasgemischen, insbesondere bei der Aufbereitung von Bio- oder Erdgas.

Membranen sind bekannt dafür, dass mit ihrer Hilfe Gase relativ leicht voneinander in einem druckgetriebenen Prozess getrennt werden können. Die Gase werden dabei mit geringem Aufwand, aber meist auch mit geringer Reinheit der Produkte voneinander getrennt.

Werden bei der Gasseparation einstufige Prozesse verwendet, so führt dies in der Regel zu großen Verlusten an Produktgas. Wenn bei einem Gasgemisch jedoch eine oder mehrere Komponenten möglichst rein und in hoher Ausbeute isoliert werden sollen, bedarf es eines größeren Aufwandes bei der technischen Anordnung der Membranen und der Steuerung des Prozesses. Dieser vermehrte Aufwand muss zum Beispiel bei der Trennung von Kohlendioxid und Methan (z.B. bei Erdgas oder Biogas) betrieben werden, wo Methan erstens als Wertstoff möglichst in das Produktgas kommen soll, um so eine maximale Wertschöpfung zu erzielen und in möglichst geringer Konzentration im Abgas vorhanden sein soll, da Methan ein klimaschädliches Gas ist und nicht in die Atmosphäre gelangen soll. Auch bei der Auftrennung von Synthesegas in Kohlenmonoxid und Wasserstoff besteht eine ähnliche Aufgabenstellung. Beispiele für mehrstufige Verschaltungen sind in der WO 2012/000727, der US 6,565,626 und der US 6,168,649 zu finden.

Bei einer klassischen Trennung eines binären Gasgemisches mit einer Membran ist die treibende Kraft der Trennung eine Partialdruckdifferenz der einzelnen Komponenten zwischen Retentat- und Permeatseite der Membrane. Dabei kann bei einem bestimmten Druckniveau auf der Retentatseite eine bestimmte Menge an Gasgemisch durch die Membran gefahren werden, um eine bestimmte Konzentration der langsamer permeierenden Komponente im Retentatgas zu erhalten. Ändert sich nun die Zusammensetzung des zu trennenden Gasgemisches, so wird sich auch die Zusammensetzung des Retentatgases und des Permeatgases ändern. Die gleiche Änderung erfährt das System, wenn sich die Menge des zu trennenden Gasgemisches(Flussrate) ändert.

Im großtechnischen Betrieb von Gasseparationsanlagen sind die Produktgasausgangsleitungen häufig an Gaspipelines angeschlossen. Dies bedingt, dass die Gasseparationsanlage das Produktgas in gleichbleibender Qualität, gleichbleibender Menge und gleichbleibendem Druck in die Pipeline einspeisen muss, auch wenn sich die Menge oder die Zusammensetzung des zu trennenden Gasgemisches ändert. Das ein zu niedriger Druck bzw. eine zu schlechte Qualität nicht akzeptabel sind ist selbstredend. Eine zu hohe Qualität ist in vielen Fällen jedoch ebenfalls nachteilig, da die Anlage mit der ausreichenden Qualität an Produktgas oft effizienter betrieben werden kann.

Viele natürliche aber auch künstliche Gasquellen (z. B. Biogasanlagen) liefern Rohgas mit zeitlich schwankender Zusammensetzung und zeitlich schwankender Gasmenge. Insbesondere bei Biogasanlagen führen Änderungen des Substrats oder Anfahr- und Abschaltprozesse zu starken Schwankungen des Feedstroms. Wie zuvor erläutert führen Schwankungen der Zusammensetzung oder Menge des zu trennenden Gasgemisches zu einer Änderung der Produktgaszusammensetzung und Produktgasmenge nach der Gasseparation. Es bedarf daher einer Regelung der Gasseparationsanlage um diese Schwankungen ausgleichen zu können.

Normalerweise werden für solche Regelungen Konzentrationsänderungen im Retentatgas und oder Permeatgas einer Membran als Steuergröße hergenommen und je nach Änderung der Steuergröße die Feedgasmenge oder der Druck des Retentates der Membran angepasst, dass sich die gewünschte Konzentration in Permeat und/oder Retentat wieder einstellt. Beispiele für derartige Steuerungen finden sich z. B. in der EP 1 324 815, der US 4,806,132 und der US 5,281,253.

Diese Regelungskonzepte sind jedoch unbrauchbar wenn die Feedgasmenge und -zusammensetzung variabel sein sollen und somit nicht zur Steuerung zur Verfügung stehen.

Im Stand der Technik, z. B. der EP 1 324 815 wird auch vorgeschlagen den Produktstrom einer Gasseparationsanlage durch einen Kompressor zu leiten, um damit Schwankungen auszugleichen und einen konstanten Druck für die Transportleitung sicherzustellen. Dieser Prozess ist energetisch ungünstig, regelungstechnisch aufwendig und auf Grund der hohen Kosten für die zusätzliche Kompression kommerziell wenig interessant.

Es besteht somit nach wie vor ein großer Bedarf an Anlagen zur Auftrennung von Gasgemischen bzw. Steuerung derselben, welche an Gasquellen mit wechselnder Rohgaszusammensetzung, -drücken und -mengen angeschlossen werden können und mindestens ein, bevorzugt jedoch mindestens zwei Produkte in hoher Reinheit, mit konstanter Qualität und konstantem Produktgasdruck liefern können.

Aufgabe der vorliegenden Erfindung war es daher ein Verfahren zur Steuerung einer Gasseparationsanlage (Kontrollsystem) bzw. eine derart gesteuerte Gasseparationsanlage zur Verfügung zu stellen, welche die Nachteile der Verfahren bzw. Anlagen des Standes der Technik nicht oder nur in verringertem Maße aufweisen.

Eine spezielle Aufgabe bestand darin, ein Verfahren bzw. eine Anlage zur Verfügung zu stellen, welche(s) mindestens ein Produkt, bevorzugt mindestens zwei Produkte gleichzeitig, in hoher bzw. konstanter Reinheit auch dann liefern kann, wenn sich die Zusammensetzung und/oder der Druck und/oder die Menge des Rohgases ändern. Diese Anlage oder dieses Verfahren soll es insbesondere auch erlauben konstante Qualitäten, d.h. Produktgaszusammensetzungen in engen Schwankungsbreiten, bevorzugt im kontinuierlichen Betrieb, zu liefern.

Das/die erfindungsgemäße Verfahren bzw. Anlage soll in einer weiteren speziellen Aufgabe besonders flexibel sein. So soll es möglich sein, die Kapazität der Anlage zu verändern, z. B. an Änderungen des Rohgasstromes und/oder an einen gestiegenen Bedarf an Produktgas und/oder an eine geänderte Anforderung an die Reinheit des/der Produktgas anzupassen, ohne Membranflächen zu- oder abschalten zu müssen und/oder den Hauptdruck (Druck des Retentatproduktgasstroms) zu verändern. Besonders bevorzugt soll eine Anpassung an Änderungen des Rohgasstroms derart möglich sein, dass Produktgasströme erhalten werden, die ohne zusätzliche Rekompression als, bevorzugt kontinuierlicher, Feed für eine Gastransportleitung geeignet sind.

Die erfindungsgemäße Steuerung soll vorzugsweise einfach und ggf. in bestehende Anlagen integrierbar sein. Weitere nicht explizit genannte Aufgaben ergeben sich aus dem Gesamtzusammenhang der vorliegenden Beschreibung, Beispiele, Ansprüche und Zeichnungen.

Gelöst werden die erfindungsgemäßen Aufgaben durch eine Vorrichtung gemäß Anspruch 1 bzw. ein Verfahren nach Anspruch 9.

Die Erfinder der vorliegenden Erfindung haben herausgefunden, dass es durch Verwendung einer mindestens zweistufigen Membranverschaltung und einer Regelung des Permeatdrucks der ersten Membrantrennstufe einfach und effizient möglich ist die Produktgasqualität (Retentatgas der zweiten Membrantrennstufe) zu steuern sowie die Menge des Produktgases bei Schwankungen der Rohgaszusammensetzung bzw. Menge konstant zu halten.

Das erfindungsgemäße Konzept kann auch auf Membranverschaltungen mit mehr als zwei Membrantrennstufen angewandt werden. Dabei kann z. B. das Permeatgas der ersten Membrantrennstufe in einer weiteren Membrantrennstufe weiter aufgearbeitet werden, was auch die Reinheit des Gasstroms mit der leichter permeierenden Komponente erhöht. In einer weiteren Alternative des erfindungsgemäßen Verfahrens können die Stoffströme einzelner oder mehrerer Membrantrennstufen die nicht als Produktströme abgezogen werden, dem Feedstrom wieder zugeführt werden. Auch damit können die Reinheiten der Produktströme und die Effizienz der Anlage gesteuert und erhöht werden.

Mit der erfindungsgemäßen Steuerung (Kontrollsystem) und der erfindungsgemäßen Anlage ist es somit gelungen ein sehr flexibles und effizientes System zur Verfügung zu stellen, welches es erlaubt die Gasseparationsanlage an Gasquellen mit schwankender Zusammensetzung und schwankender Menge an Rohgas anzuschließen und dennoch eine frei einstellbare Produktgasqualität und -menge sicherzustellen.

Besonders hervorzuheben ist noch einmal, dass es mit dem erfindungsgemäßen Verfahren möglich ist den Hauptdruck (Retentatdruck der zweiten Membrantrennstufe (Retentattrennstufe (2))) im System konstant zu halten, so dass die erfindungsgemäße Anlage ohne zusätzliche, nach der ersten Membrantrennstufe angeordneten, Kompressionseinrichtungen an eine Gastransportleitung angeschlossen werden kann.

Umgekehrt erlaubt es die erfindungsgemäße Anlage aber auch unter bestimmten Bedingungen, z. B. durch Erhöhung der Kompressordrehzahl, die Kapazität zu erhöhen und mehr Produktgas in einer vorgegebenen Qualität zu liefern.

Die erfindungsgemäße Anlage eignet sich besonders gut für die Aufbereitung von Rohgasströmen aus Biogasanlagen oder zur Aufreinigung von Synthesegas, wo sich die anfallende Menge Rohgas und die Zusammensetzung des Rohgases sehr oft ändert. Die erfindungsgemäße Steuerung gleicht die Schwankungen problemlos aus.

Die erfindungsgemäße Regelung ist einfach und kann in bestehende Anlagen zur Gasseparation integriert werden.

In der erfindungsgemäßen Vorrichtung wird lediglich ein Kompressor vor der 1. Membrantrennstufe benötigt. Ein weiterer Kompressor oder zusätzliche Vakuumpumpen sind in der Regel nicht nötig was die Investitionskosten und Betriebskosten der Anlage niedrig hält. Das erfindungsgemäße Verfahren und die erfindungsgemäße Anlage schließen die Verwendung solcher zusätzlicher Komponenten jedoch nicht aus.

Das erfindungsgemäße Verfahren ist auch dadurch flexibel, dass mehrere verschiedene Arten von Sensoren alleine oder gemeinsam verwendet werden können. Es können Zusammensetzungen von Strömen genauso als Steuergröße verwendet werden wie Flüsse von Stoffströmen. Insbesondere bei der Verwendung von Flusssensoren wird ein günstiges, schnelles, genaues und einfaches Verfahren zur Verfügung gestellt.

Gegenstand der vorliegenden Erfindung ist daher eine Vorrichtung gemäß Anspruch 1 bzw. ein Verfahren nach Anspruch 9. Bevorzugte Ausführungsformen werden in den abhängigen Ansprüchen unter Schutz gestellt.

Die vorliegende Erfindung wird nachfolgend im Detail beschrieben. Zuvor werden einige wichtige Begriffe definiert.

Die nachfolgend in Klammern angegebenen Bezugszeichen entsprechend den in den Abbildungen verwendeten Bezugszeichen.

Der Quotient der Permeanzen der Einzelgase ergibt die **Selektivität** der Membran zur Trennung bezüglich der zwei Gase und gibt somit an wie gut die Membran ein Gasgemisch bezüglich der beiden Komponenten auftrennen kann. Als **Permeat** wird der gesamte auf der Niederdruckseite der Membran, Membranmodule oder Membrantrennschritts anfallende Strom bezeichnet.

Als **Permeatgas** wird/werden die jeweils an der Membran, an dem Membranmodul, oder im Membrantrennschritt im **Permeatstrom** gegenüber den jeweiligen Eintrittsstrom angereicherten Komponente/Komponenten bezeichnet.

Als **Retentat** wird der gesamte auf der Hochdruckseite der Membran, Membranmodule oder Membrantrennschritts anfallende Strom bezeichnet, der nicht durch die Membran hindurch tritt.

Als **Retentatgas** wird/werden die jeweils an der Membran, an dem Membranmodul, oder im Membrantrennschritt im **Retentatstrom** gegenüber den jeweiligen Eintrittsstrom angereicherten Komponente/Komponenten bezeichnet.

**Rohgas** bzw. **Rohgasgemisch** bzw. **Rohgasstrom (17)** bzw. **zu trennendes Gasgemisch** bezeichnet ein Gasgemisch aus mindestens zwei Gasen bzw. einen Strom dieses Gasgemisches, das/der mittels des erfindungsgemäßen Verfahrens bzw. der erfindungsgemäßen Vorrichtung aufgetrennt werden soll.

**Feedstrom (5)** bezeichnet einen Gasstrom, der der Feedstromtrennstufe (1) zugeführt wird. Dieser Strom kann zu Beginn der Durchführung des Verfahrens dem Rohgasstrom (17) bzw. dem durch einen Kompressor komprimierten Rohgasstrom entsprechen. Nach Rückführung des zweiten Permeatstroms (9) bzw. des dritten Retentatstroms (10) setzt sich der Feedstrom (5) aus den Gasen des Rohgasstrom (17), des zweiten Permeatstroms (9) und des dritten Retentatstroms (10) zusammen. Der Feedstrom (5) kann dabei erzeugt werden in dem die Ströme (9) und (10) entweder beide mit dem unkomprimierten Rohgasstrom (17) oder beide mit dem komprimierten Rohgasstrom oder einer mit dem unkomprimierten und einer mit dem komprimierten Rohgasstrom vermischt werden oder in dem die Ströme (9) und/oder (10) im Kompressor mit dem Rohgasstrom (17) vermischt werden. Kombinationen der zuvor beschriebenen Varianten sind von der vorliegenden Erfindung mit umfasst.

**Feedstromtrennstufe (1)** bezeichnet eine Membrantrennstufe zur Auftrennung des Feedstroms (5) in einen ersten Permeat- und einen ersten Retentatstrom (6) bzw. (7).

**Retentattrennstufe (2)** bezeichnet eine Membrantrennstufe die gleich oder unterschiedlich zur Feedstromtrennstufe (1) aufgebaut sein kann, zur Auftrennung des ersten Retentatstroms (7) in einen zweiten Permeat- und einen zweiten Retentatstrom (9) bzw. (8).

**Permeattrennstufe (3)** bezeichnet eine optional vorhandene Membrantrennstufe die gleich oder unterschiedlich zur Feedstromtrennstufe (1) bzw. Retentattrennstufe (2) aufgebaut sein kann, zur Auftrennung des ersten Permeatstroms (6) in einen dritten Permeat- und einen dritten Retentatstrom (11) bzw. (10).

Die Begriffe **"Steuerung"** und **"Regelung"** werden im Rahmen der vorliegenden Erfindung synonym verwendet.

Anhand der nachfolgend beschriebenen bevorzugten und speziellen Ausführungsformen des erfindungsgemäßen Verfahrens sowie der bevorzugten und besonders geeigneten Ausführungen sowie der Zeichnungen und Beschreibungen der Zeichnungen wird die Erfindung lediglich exemplarisch näher erläutert, d. h. sie ist nicht auf diese Ausführungs- und Anwendungsbeispiele oder auf die jeweiligen Merkmalskombinationen innerhalb einzelner Ausführungsbeispiele beschränkt.

Einzelne Merkmale, die im Zusammenhang mit konkreten Ausführungsbeispielen angegeben und/oder dargestellt sind, sind nicht auf diese Ausführungsbeispiele oder die Kombination mit den übrigen Merkmalen dieser Ausführungsbeispiele beschränkt, sondern können im Rahmen der technischen Möglichkeiten, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Die vorliegende Erfindung betrifft eine Vorrichtung zur Trennung von Gasen umfassend als Membrantrennstufen zumindest die Feedstromtrennstufe (1), die Retentattrennstufe (2) und optional weitere Membrantrennstufen wie die Permeattrennstufe (3). Weiterhin umfasst sie zumindest einen, auf der Feedseite der Feedstromtrennstufe (1) angeordneten, Kompressor (4), und optional zumindest eine, bevorzugt eine oder zwei, Vakuumpumpe(n), die derart angeordnet sind, dass sie eine Partialdruckdifferenz zwischen der Retentat- und Permeatseite der Membran erzeugen. Dabei trennt die Feedstromtrennstufe (1) einen Feedstrom (5), bestehend aus mindestens zwei Komponenten, in einen ersten Permeatstrom (6), der verworfen oder als zweiter Produktstrom entnommen oder weiterverarbeitet wird, und einen ersten Retentatstrom (7) auf und die Retentattrennstufe (2) den ersten Retentatstrom (7) in einen zweiten Permeatstrom (9), welcher bevorzugt dem Feedstrom (5) zugeführt wird, und einen zweiten Retentatstrom (8), der als Produkt entnommen wird, auf. Die Vorrichtung ist dadurch gekennzeichnet, dass sie eine Permeatsteuereinrichtung (18a) und/oder (18b) umfasst mit der der Permeatdruck der Feedstromtrennstufe (1) erhöht oder erniedrigt werden kann und welche anhand von Messwerten eines oder mehrerer Messeinrichtungen (19a) im ersten Feedstrom (5) und/oder eines oder mehrerer Messeinrichtungen (19b) im zweiten Retentatstrom (8) gesteuert wird. Die Messeinrichtungen (19a) und (19b) sind bevorzugt verschieden.

In einer ersten bevorzugten Ausführungsform der vorliegenden Erfindung umfasst die erfindungsgemäße Vorrichtung mindestens eine weitere Membrantrennstufe, welche den ersten Permeatstrom (6) weiter aufarbeitet. In dieser

Ausführungsform ist daher Gegenstand der vorliegenden Erfindung ein Vorrichtung wie zuvor beschrieben, die dadurch gekennzeichnet ist, dass sie zumindest eine zusätzliche Permeattrennstufe (3) umfasst, welche den ersten Permeatstrom (6), in einen dritten Retentatstrom (10), welcher bevorzugt dem Feedstrom (5) zugeführt wird, und einen dritten Permeatstrom (11), der verworfen, oder als Produkt entnommen oder weiterverarbeitet wird, aufteilt.

In dieser ersten bevorzugten Ausführungsform kann der Permeatdruck der Feedstromtrennstufe (1) durch eine oder zwei Permeatsteuereinrichtung(en) (18a) und/oder (18b) gesteuert werden. Die Permeatsteuereinrichtung (18a) ist im ersten Permeatstrom (6) und die Permeatsteuereinrichtung (18b) im dritten Retentatstrom (10) angeordnet. Die Steuereinrichtungen (18a) und/oder (18b), werden wie gesagt anhand von Messwerten eines oder mehrerer Messeinrichtungen (19a) und/oder (19b) gesteuert.

Wie bereits erwähnt ist es besonders bevorzugt, wenn der zweite Permeatstrom (9) und/oder der dritte Retentatstrom (10) dem Feedstrom (5) zugeführt werden. Dadurch können besonders hohe Produktreinheiten und Ausbeuten erzielt werden.

Das erfindungsgemäße Verfahren bzw. die erfindungsgemäße Vorrichtung zeichnet sich dadurch aus, dass es/sie derart ausgestaltet ist, dass auch bei schwankenden Zusammensetzungen und/oder Mengen oder Drücken des Rohgasstromes (17), durch die erfindungsgemäße Steuerung eine nahezu gleich bleibende Ausbeute und Qualität der beiden Produktgasströme (8) und bevorzugt auch (11) gewährleistet werden kann.

Unter "Steuereinrichtung(en)" (18a) bzw. (18b) sind im Rahmen der vorliegenden Erfindung Geräte, Bauteile, Anlagen oder Teile von Anlagen zu verstehen, die eine Erhöhung oder Absenkung des Permeatdrucks der Feedstromtrennstufe (1) ermöglichen. Eine nicht abschließende Liste von möglichen Steuereinrichtungen umfasst: Druckminder- oder Druckerhöhungsventile, Gasentspannungseinrichtungen, Vakuumpumpen. Besonders bevorzugt handelt es sich um Ventile.

In einer bevorzugten Ausführungsform der vorliegenden Erfindung ermittelt die Messeinrichtung (19b) die Konzentration der schlechter permeierenden Komponenten im Produktstrom (8) bzw. einen dazu korrespondierenden Parameter. Die Ermittlung der Konzentration mit der Messeinrichtung (19b) kann online oder off-line erfolgen, je nach verwendeter Messeinrichtung. Bevorzugt erfolgt eine online Messung, weil damit die Regelung schneller erfolgen kann. Geeignete Messeinrichtungen sind dem Fachmann bekannt. Bevorzugt handelt es sich jedoch um Gasmessgeräte, die die Zusammensetzung der Gasströme für eine oder mehrere Komponenten messen können, insbesondere Inlinemessgeräte, die direkt im Gasstrom messen (z.B. mittels Infrarotabsorption oder Schallgeschwindigkeit, Dichte, Coriolis) und externe Messgeräte nach den gleichen Messprinzipien, die eine Probe aus dem Strom entnehmen und entweder kontinuierlich oder nicht kontinuierlich (batchmäßig) vermessen. Diese haben den Vorteil, dass die Zusammensetzung sehr schnell ermittelt werden kann und als Eingangsgröße in der Regelung sofort zur Verfügung steht.

Kommt es zu einer Schwankung in der Zusammensetzung des Rohgases oder zu einer Veränderung der Menge oder des Drucks des Rohgasstroms (17) und/oder des Feedstroms (5), so ändern sich ohne Gegensteuerung auch die Eigenschaften, z. B. die Zusammensetzungen, des Produktstroms (8). Durch die Messeinrichtungen (19b) werden entsprechende Veränderungen registriert und eine Gegensteuerung mit Hilfe der Steuereinrichtungen (18a) bzw. (18b) eingeleitet, so dass die erfindungsgemäße Anlage derart geregelt werden kann, dass die Eigenschaften, insbesondere die Zusammensetzungen, des Produktgasstroms (8) wieder in einem vorgegebenen Bereich/Korridor liegen. Mittels der erfindungsgemäßen Steuerung kann somit eine Veränderung der Zusammensetzung des Produktstroms (8) effektiv und effizient mit einer Anpassung des Permeatdrucks der Feedstromtrennstufe (1) kompensiert werden kann.

Ob der Permeatdruck der Feedstromtrennstufe (1) als Reaktion auf Veränderung der Zusammensetzung des Produktstroms (8) erhöht oder verringert werden muss kann je nach zu trennendem Gasgemisch, verwendeter Membran und Membranverschaltung vom Betriebsdruck der Anlage abhängen. Dies wird weiter unten in Beispiel 1 gezeigt. Mit einer Simulation wie in Beispiel 1 gezeigt kann jedoch einfach ermittelt werden wie im konkreten Anwendungsfall gegengesteuert werden muss.

In Verfahrensalternativen wie in Abbildung 3 gezeigt muss auch die Menge der Rückströme beachtet werden. Zu große Rückströme können die Effizienz der Anlage mindern. In Beispiel 1 wird gezeigt wie die Menge der Rückströme dazu führen kann, dass entweder mit einer Erhöhung oder Verringerung des Drucks im ersten Permeatstrom (6) gegengesteuert werden muss.

Die vorliegende Erfindung umfasst somit folgende alternative Verfahren:

i. Die Konzentration einer schwerer permeierenden Komponente B, direkt mittels (19b) ermittelt oder ggf. auch ermittelt durch einen dazu korrelierenden Parameter, des zweiten Retentatstroms (8) fällt unter einen vorgegebenen Sollwert, der Druck des ersten Permeatstroms (6) wird dann mittels der Steuereinrichtung (18a) und/oder (18b) erhöht oder erniedrigt, bis besagte Parameter, insbesondere die gewünschte Konzentration, wieder im Sollbereich liegt,

ii. Die Konzentration einer schwerer permeierenden Komponente B, direkt mittels (19b) ermittelt oder ggf. auch ermittelt durch einen dazu korrelierenden Parameter, des zweiten Retentatstroms (8) steigt über einen vorgegebenen

Sollwert, der Druck des ersten Permeatstroms (6) wird daher mittels der Steuereinrichtung (18a) und/oder (18b) erhöht oder erniedrigt, bis besagter Parameter, insbesondere die gewünschte Konzentration, wieder im Sollbereich liegt.

Der Begriff "dazu korrelierender Parameter" wird nachfolgend für o.g. Verfahrensalternativen i. und ii. erläutert, gilt aber analog für die ganze Beschreibung der Erfindung. Die Messung eines "korrelierenden Parameters" bedeutet, dass die Zielgröße - oben die Konzentration einer schwerer permeierenden Komponente im zweiten Retentatstrom (8) - nicht direkt, sondern indirekt gemessen wird, indem ein anderer Parameter gemessen und dann eine Korrelation zum Zielparameter hergestellt wird. Für den obigen Fall bedeutet dies, dass wenn die Konzentration der schwerer permeierenden Komponente B im zweiten Retentatstrom (8), sprich die Zusammensetzung des zweiten Retentatstroms (8), nicht unmittelbar gemessen werden soll, stattdessen ein anderer Parameter gemessen werden kann, sofern zwischen beiden eine Korrelation existiert. Diese Korrelation kann z.B. durch vorherige Kalibrierung der Anlage, bestimmt werden. Als korrelierender Parameter zur Konzentration einer schwerer permeierenden Komponente B des zweiten Retentatstroms (8) könnte beispielsweise die Konzentration der schwerer permeierenden Komponente im zweiten Permeatstrom (9) gemessen und entsprechend zur Steuerung verwendet werden. In einer weiteren bevorzugten Ausführungsform umfasst die erfindungsgemäße Vorrichtung die Messeinrichtung (19a). Diese ermittelt Parameter des Feedstroms (5) und/oder des Rohgasstroms (17) wie z. B. den Volumenstrom oder dessen Zusammensetzung. In dieser Ausführungsform werden also nicht die Eigenschaften des Produktstroms (8) analysiert, sondern Eigenschaften des Gasstroms, welcher der ersten Membrantrennstufe zugeführt wird.

Kommt es zu einer Schwankung in der Zusammensetzung oder zu einer Veränderung der Menge oder des Drucks des Rohgasstromes (17) oder des Feedstroms (5), so wird dies durch die Messeinrichtung (19a) registriert und mittels der Steuereinrichtung(en)(18a) bzw. (18b) erfolgt eine Anpassung des erfindungsgemäßen Verfahrens.

In dieser Ausführungsform ist es alleine durch Messung der Volumenströme mittels der Messeinrichtung (19a) möglich, auch ohne aufwändigere Messung von Gaszusammensetzungen im Produktstrom (8), eine schnelle Steuerung der Anlage zu gewährleisten. Vorzugsweise erfolgt zunächst eine Kalibrierung der Anlage, wobei die Zielgröße, d.h. die Zusammensetzung oder der Druck oder der Volumenstrom, besonders bevorzugt die Zusammmensetzung, ganz besonders bevorzugt die Konzentration einer schwerer permeierenden Komponente, des zweiten Retentatstroms (8) mit den Messwerten aus dem Rohgas- und/oder Feedstroms (17) bzw. (5) korreliert werden, so dass alleine durch die Messung der Eigenschaften des Rohgas- und/oder Feedstroms (17) bzw. (5) die Anlage gesteuert werden kann.

Bevorzugt werden als Messeinrichtung (19a) Durchflussmesser (Masse oder Volumen) verwendet. Es können aber auch Messeinrichtungen zur Bestimmung der Zusammensetzung des Feedstroms (5) und/oder des Rohgasstroms analog denen weiter vorne für die Messeinrichtung (19b) beschriebenen verwendet werden. Die Bestimmung der Parameter mittels der Messeinrichtung (19a) kann online oder off-line erfolgen. Bevorzugt erfolgt eine online Messung. Geeignete Messeinrichtungen sind dem Fachmann bekannt.

Bevorzugte Gegenstände der vorliegenden Erfindung sind daher Verfahren, bei denen die Steuerung der erfindungsgemäßen Anlage nach einer oder mehreren der folgenden Alternativen erfolgt:

iii. der Volumenstrom des Feedstroms (5) und/oder des Rohgasstroms (17), direkt ermittelt durch (19a) oder ggf. auch ermittelt durch einen dazu korrelierenden Parameter, steigt über einen vorgegebenen Sollwert, der Druck des ersten Permeatstroms (6) wird daher mittels der Steuereinrichtung (18a) und/oder (18b) soweit erhöht oder erniedrigt bis der notwendige Druck erreicht ist und somit die Zielgröße des zweiten Retentatstroms (8), wieder im Sollbereich liegt,

iv. der Volumenstrom des Feedstroms (5) und/oder des Rohgasstroms (17), direkt ermittelt durch (19a) oder ggf. auch ermittelt durch einen dazu korrelierenden Parameter, sinkt unter einen vorgegebenen Sollwert, der Druck des ersten Permeatstroms (6) wird daher mittels der Steuereinrichtung (18a) und/oder (18b) soweit erniedrigt oder erhöht, bis die Zielgröße des zweiten Retentatstroms (8), wieder im Sollbereich liegt,

v. die Konzentration einer schwerer permeierenden Komponente B des Feedstroms (5) und/oder des Rohgasstroms (17), direkt ermittelt durch (19a) oder ggf. auch ermittelt durch einen dazu korrelierenden Parameter, steigt, der Druck des ersten Permeatstroms (6) wird daher mittels der Steuereinrichtung (18a) und/oder (18b) erniedrigt oder erhöht, bis die Zielgröße des zweiten Retentatstroms (8), wieder im Sollbereich liegt,

vi. die Konzentration einer schwerer permeierenden Komponente B des Feedstroms (5) und/oder des Rohgasstroms (17), direkt ermittelt durch (19a) oder ggf. auch ermittelt durch einen dazu korrelierenden Parameter, sinkt, der Druck des ersten Permeatstroms (6) wird daher mittels der Steuereinrichtung (18a) und/oder (18b) erhöht oder erniedrigt, bis die Zielgröße des zweiten Retentatstroms (8), bevorzugt die Zusammensetzung des zweiten Retentatstroms (8), wieder im Sollbereich liegt.

Die o.g. Verfahrensalternativen (i) bis (vi) umfassen bevorzugt einen vorgeschalteten Verfahrensschritt, z. B. wie in Beispiel 1 gezeigt, in dem ermittelt wird, ob auf die entsprechende Veränderung der Zusammensetzung des

Produktstroms (8) mit einer Erhöhung oder Erniedrigung des Drucks des ersten Permeatstroms (6) reagiert werden muss. Alternativ kann dies auch iterativ bei der Durchführung des Verfahrens erfolgen.

Unter Messeinrichtung (19a) oder (19b) werden einzelne Messgeräte, Apparaturen etc. aber auch Kombinationen oder Zusammenschaltungen mehrerer Geräte, Apparaturen etc. verstanden.

Die Messeinrichtungen (19a) und (19b) können untereinander in den verschiedenen Verfahrensalternativen flexibel kombiniert werden. So kann z.B. eine Messeinrichtung (19a) zusammen mit einer Messeinrichtung (19b) verwendet werden um die Steuereinrichtung (18a) und/oder (18b) zu regeln. In diesem Fall hätte man ein Backup Messsystem, welches ermöglicht die Messsysteme gegenseitig zu kontrollieren und abzusichern. Somit kann z. B. festgestellt werden, wenn eine Messeinrichtung kaputt ist. Entsprechende Ausgestaltungsformen der vorliegenden Erfindung sind für einen Fachmann anhand der Beschreibung und den Beispielen der vorliegenden Erfindung leicht auffindbar und von der Erfindung mit erfasst.

Je nach verwendeter Mess- und/oder Steuereinrichtung sowie deren Anzahl kann es vorteilhaft sein zwischen die Mess- und die Steuereinrichtung mindestens eine Datenverarbeitungseinrichtung (in den Abbildungen nicht gezeigt), bevorzugt mindestens einen Computer, zwischenzuschalten. Dadurch kann die erfindungsgemäße Vorrichtung bzw. das erfindungsgemäße Verfahren leicht zentral geregelt und die verschiedenen Messwerte bzw. Regelungsschritte protokolliert und koordiniert werden. Entsprechende technische Lösungen sind auf dem Markt erhältlich bzw. dem Fachmann bekannt und vom Umfang der vorliegenden Erfindung mit umfasst. Besonders bevorzugt wird zumindest ein PID-Controller (PID = Proportional-Integral-Derivative) zwischengeschaltet. Dieser Controller bestimmt die Fehlerabweichungen zwischen Ist- und Sollwerten, versucht diese zu minimieren, und regelt so die Steuereinrichtungen (18a) bzw. (18b).

Grundsätzlich kann es sich bei den zuvor erwähnten Datenverarbeitungseinrichtungen um unterschiedliche Einrichtungen handeln, d.h. es können im erfindungsgemäßen Verfahren mehrere Datenverarbeitungseinrichtungen verwendet. Diese Datenverarbeitungseinrichtungen können optional miteinander vernetzt werden. Bevorzugt wird jedoch nur eine zentrale Datenverarbeitungseinrichtung verwendet mit der zentral alle Mess- und Steuerungsschritte überwacht und geregelt werden.

Das erfindungsgemäße Verfahren und die erfindungsgemäße Vorrichtung bieten den großen Vorteil einer höchst variablen Anlagenkapazität, d.h. der Möglichkeit die Anlagenleistung variabel steuern und an den Bedarf an Produktgas anpassen zu können. Dies kann wie ebenfalls bereits erwähnt ohne Zu- bzw. Abschaltung von Membranflächen erfolgen. Bevorzugt wird die Anlagenleistung der erfindungsgemäßen Anlage durch eine Änderung des Fördervolumens des Kompressors (4) erhöht oder erniedrigt und einer dadurch verursachten Änderung der Konzentration der schwerer permeierenden Komponente B im zweiten Retentatstrom (8) gemäß den Verfahrensalternativen (i) bzw. (ii) und/oder einer dadurch verursachten Änderung des Flusses des Feedstroms (5) gemäß Verfahrensalternative (iii) bzw. (iv) entgegengewirkt.

Die zuvor beschriebenen Verfahren (i) bis (vi) können miteinander kombiniert bzw. Mischformen angewendet werden.

Zur Regelung der Kompressorleistung umfasst die erfindungsgemäße Vorrichtung bevorzugt eine Kontrolleinrichtung (in den Abbildungen nicht gezeigt), welche die Leistung des Kompressors (4), bevorzugt dessen Drehzahl und damit dessen Fördervolumen, regelt. Ein Beispiel hierfür wäre ein Frequenzumformer.

Mittels der Kontrolleinrichtung wird bevorzugt die Leistung des Kompressors (4) an die zu trennende Menge Rohgas (z.B. die Produktion von Biogas im Fermenter) oder an die Menge zu produzierende Menge Produktgas (z.B. Methanstrom im Retentatstrom (8)) angepasst. Die Änderung der Produktionsmenge an Rohgas (z.B. Rohbiogas aus einer Biogasanlage) kann zum Beispiel an einer Füllstandsanzeige eines Rohgaszwischenspeichers oder am Druck des Rohgases in einem Fermenter abgelesen werden. Steigt der Füllstand oder der Druck im Fermenter, so kann die Trennkapazität der Membrantrennanlage durch Erhöhung der Drehzahl des Verdichters erhöht werden. Somit kann der Druck im Fermenter oder der Füllstand im Zwischenspeicher konstant gehalten oder gesenkt werden. Sinkt im Gegensatz dazu der Füllstand im Zwischenspeicher oder der Druck im Fermenter so kann durch Reduktion der Drehzahl des Kompressors die Trennkapazität der Membrantrennanlage verringert werden und somit der Füllstand im Zwischenspeicher oder der Druck im Fermenter konstant gehalten oder verringert werden. Bei Veränderung des Feedvolumenstromes (5), die sich durch eine Änderung der Drehzahl des Kompressors ergibt, würde sich Änderung der Zusammensetzung des Retentatstromes (8) ergeben. Ein großer Vorteil der vorliegenden Erfindung liegt darin, dass diese Veränderung durch in dieser Erfindung weiter oben beschriebenen Regelmechanismen verhindert werden kann. Mit der erfindungsgemäßen Steuerung ist es möglich, die Trennkapazität der Vorrichtung und die Zusammensetzung des Produktgasstroms (8) unabhängig von einander zu steuern. Man kann daher die Kapazität der Vorrichtung in einem bestimmten Rahmen unter Zuhilfenahme der Steuereinrichtungen (18a) und (18b) mit Hilfe der Kontrolleinrichtung des Kompressors verändern, ohne dass sich die Produktgasqualitäten im Strom (8) ändert, ohne dass der Retentatdruck in den Trennstufen (1) und (2) angepasst werden müsste und ohne dass Membranflächen zu- oder weggeschaltet werden müssten.

Diese Flexibilität der Kapazität kann auf einen bestimmten Bereich der Kompressordrehzahl und damit Rohgasfördervolumen beschränkt sein, welche vom Design der Anlage bestimmt wird, insbesondere hinsichtlich Druck in

den Trennstufen, Flächenverhältnissen der Membranen in den einzelnen Trennstufen (1), (2) und optional (3) und vor allem hinsichtlich der Steuereinrichtung (18a) und/oder (18b) und deren Bandbreite bei der Einstellung des Druckes. Wenn beispielsweise der minimale mögliche Druck im Permeatstrom (6) 0,3 bara beträgt, so ist dies der limitierende Parameter für den Feedgasvolumenstrom (5). Eine weitere Erhöhung des Feedgasvolumenstromes (5) würde bedeuten, dass die Konzentration der langsameren Komponente B im Retentatstrom (8) unter den Sollwert sinken würde und somit der gewünschte Betriebspunkt der Anlage nicht mehr eingehalten werden könnte. Das gleiche gilt für den Fall, dass der Druck im Permeat (6) nicht mehr weiter erhöht werden könnte als zum Beispiel Umgebungsdruck. Dieser Druck limitiert nun die Absenkung des Feedvolumenstromes (5), da bei weiterer Absenkung des Feedvolumenstromes (5)der Gehalt an schwerer permeierender Komponente B im Retentat (8) über den Sollwert steigen würde.

Unter "Kontrolleinrichtung" wird hierbei die Steuereinheit des Kompressors verstanden, welche die Leistung des Kompressors, bevorzugt dessen Drehzahl regelt. Diese Kontrolleinrichtung kann derart ausgestaltet sein, dass sie Messdaten von Sensoren im Rohgasstrom (17) und/oder in vorgelagerten Speichern oder Produktionseinrichtungen verarbeitet. Beispielsweise kann das Signal der Messeinrichtung dann einen Frequenzumformer eines Verdichters steuern. Entsprechende Kompressoren und Kontroll- bzw. Steuereinrichtungen sind am Markt erhältlich und dem Fachmann bekannt. Entsprechende Messeinrichtungen in den jeweiligen Strömen, anhand deren Messwerte die Kontrolleinheit gesteuert wird, sind dem Fachmann ebenfalls bekannt.

Mit der zuvor beschriebenen Ausführungsform, d.h. der Regelung und Anpassung der Kompressorleistung, kann sichergestellt werden, dass die Trennkapazität der Membrantrennanlage den Bedürfnissen der Produktion des Rohgases und/oder notwendigen Mengen an Produktgas (8) angepasst wird. Schwankungen in der Gaszusammensetzung des Stroms (8), die sich aus der unterschiedlich verarbeitenden Menge an Rohgas (17) und dessen Zusammensetzung ergeben, werden von der Steuereinrichtung (18a) und/oder (18b) ausgeglichen.

Die erfindungsgemäße Vorrichtung, siehe beispielhaft Abbildungen 1 bis 3, beinhaltet wie zuvor gesagt eine Verkettung von zumindest zwei, bevorzugt jedoch zumindest drei, Membrantrennstufen. Jede Stufe besteht aus einem oder mehreren physikalischen Gasseparationsmodulen, die innerhalb einer Stufe parallel und/oder seriell verschaltet sind. Als Triebkraft für die Gasauftrennung in den Modulen wird eine Partialdruckdifferenz zwischen der Retentat- und der Permeatseite in den jeweiligen Membrantrennstufen erzeugt. Die Partialdruckdifferenz wird mittels eines Kompressors (4), welcher auf der Feedseite der Feedstromtrennstufe (1) angeordnet ist, und gegebenenfalls mittels zumindest einer, bevorzugt einer oder zwei Vakuumpumpe(n)(in Abbildungen 1 bis 3 nicht dargestellt) bevorzugt auf der Permeatseite, insbesondere der Retentattrennstufe (2) im zweiten Permeatstrom (9) und/oder der Permeattrennstufe (3) in dritten Permeatstrom (11), erzeugt. Ggf. kann es vorteilhaft sein in einer oder mehrerer der Membrantrennstufen die Partialdruckdifferenz durch einen permeatseitigen Spülgasstrom zu erzeugen bzw. zu verstärken.

In einer bevorzugten Ausgestaltungsform der vorliegenden Erfindung bringt ein Kompressor (4) das Rohgasgemisch bzw. das Gasgemisch aus dem Rohgasstrom (17) und dem zweiten Permeatstrom (9) und/oder dem dritten Retentatstrom (10), auf den gewünschten Druck im Bereich von 5 bis 100 bar, vorzugsweise jedoch auf einen Druck von 9 bis 75 bar. Sollte der Rohgasstrom (17) schon den benötigten Druck aufweisen, so kann der Verdichter (4) ganz entfallen oder der Verdichter (4) muss nur mehr den zweiten Permeatstrom (9) und/oder dem dritten Retentatstrom (10) - sofern diese zum Feedstrom (5) zurückgeführt werden - auf den gewünschten Druck im Bereich von 5 bis 100 bar, vorzugsweise jedoch auf einen Druck von 9 bis 75 bar bringen. Der erhaltene Feedstrom (5) wird in die Feedstromtrennstufe (1) eingeleitet. In der Feedstromtrennstufe (1) wird eine Vortrennung des Rohgasgemisches in leichter permeierende Komponenten (Permeatgas), die zu einem großen Teil ins Permeat der ersten Stufe gelangen und weniger schnell permeierende Komponenten (Retentatgas), die von der Membran vorwiegend zurückgehalten und sich im Retentat anreichern, erhalten.

Allgemein kann man sagen, dass in der Feedstromtrennstufe (1) bevorzugt 20 bis 100%, besonders bevorzugt 40 bis 70 % der leichter permeierenden Komponente A, d.h. des Permeatgases A, vom Feedstrom (5) in das Permeat übergehen.

Das Retentat der Feedstromtrennstufe (1) wird mittels des ersten Retentatstroms (7) der Retentattrennstufe (2) zugeführt, in der die Feinreinigung erfolgt. Optional kann eine Druckminderung oder Druckerhöhung des ersten Retentatstroms mit einer geeigneten Komponente, z. B. einem Druckminderventil (12) im ersten Retentatstrom (7) erfolgen. Auf der Retentatseite der Retentattrennstufe (2), d.h. im zweiten Retentatstrom (8), befindet sich bevorzugt ein Druckminderventil (13) (in Abbildung 1 bis 3 nicht gezeigt), mittels dessen der Hauptdruck im System (Betriebsdruck der Trennstufen (1) und (2) = Retentatdruck der Stufen (1) und (2)) aufrecht und konstant gehalten werden kann. Der Gehalt der schwerer permeierenden Komponenten B, d.h. eines Retentatgases B, wird in der Retentattrennstufe (2) weiter erhöht, sodass der Gehalt an Komponente B oder eines Retentatgases B im zweiten Retentatstrom (8) mehr als 90%, bevorzugt mehr als 95% und besonders bevorzugt mehr als 97% beträgt. In einer besonders bevorzugten Variante zeichnet sich das erfindungsgemäße Verfahren bzw. die erfindungsgemäße Vorrichtung dadurch aus, dass mindestens 95%, bevorzugt mindestens 97%, besonders bevorzugt mindestens 99% und ganz besonders bevorzugt mindestens 99,5 %, der mit dem Rohgasstrom (17)in die Vorrichtung eingeführten Retentatkomponente der Feedstromtrennstufe (1) über den zweiten Retentatstrom (8) ausgeschleust werden.

Der Stufentrennschnitt der Retentattrennstufe (2) beträgt bei einer Konzentration der Komponente A oder eines Permeatgases A von 50% im ersten Retentatstrom (7) zwischen 10 und 60%, vorzugsweise zwischen 20 und 50 %.

Das Permeat der Retentattrennstufe (2) wird bevorzugt mittels des zweiten Permeatstroms (9) rückgeführt, dem Feedstrom (5) zugeführt und wiederaufbereitet. Dies kann - wie zuvor bei der Definition des Begriffes "Feedstrom" bereits erläutert - je nachdem ob ein Kompressor (4) oder gar ein mehrstufiger Kompressor (4) verwendet wird auf unterschiedliche Art und Weise erfolgen. Bei einem einstufigen Kompressor (4) wird der zweite Permeatstrom (9) bevorzugt der Saugseite des Kompressors (4) zugeführt.

Wird im erfindungsgemäßen Verfahren ein mehrstufiger Kompressor eingesetzt, so handelt es sich bevorzugt um einen Kompressor mit Zwischenkühlung oder mit externer Kühlung. Besonders bevorzugt wird ein Kompressor mit 2 bis 5 Kompressionsstufen verwendet. Das Druckverhältnis zwischen den Kompressionsstufen liegt bevorzugt im Bereich von 1 bis 10, bevorzugt 1 bis 5, besonders bevorzugt 2 oder 3.

Das mit der Komponente A oder einem Permeatgas A stark angereicherte Permeat der Feedstromtrennstufe (1) wird mittels des ersten Permeatstroms (6) abgeführt oder bevorzugt der Permeattrennstufe (3) zugeführt. Der Permeatdruck der Feedstromtrennsufe (1) wird dabei mittels der Steuereinrichtungen (18a) und/oder (18b) entsprechend gesteuert.

Ist eine Permettrennstufe (3) vorhanden, so wird besonders bevorzugt eine Steuereinrichtung (18b) im dritten Retentatstrom (10) verwendet. Diese Anordnung bewirkt - sofern im 1. Permeatstrom (6) keine weiteren Steuereinrichtungen vorhanden sind - dass der Permeatdruck der Feedstromtrennstufe (1) gleich dem Feeddruck der Permeattrennstufe (3) ist. Somit werden beide Stufen mit nur einer Steuereinrichtung gesteuert. In diesem Fall ist es besonders vorteilhaft auch darauf zu achten, mittels der Steuereinrichtung (18b) zu verhindern, dass der Druck des Retentats der Permeattrennstufe (3) auf Umgebungsdruck abfällt. Auf diese Weise kann die treibende Kraft für die Permeattrennstufe (3) erhalten bleiben. Fällt der Druck des Retentats der Permeattrennstufe (3) auf Umgebungsdruck oder darunter ab müsste in den Permeatstrom (11) der Permeattrennstufe (3) eine zusätzliche Vakuumpumpe vorgesehen und/oder der Druck in der Permeattrennstufe (3) mittels eines Spülgasstroms erhöht werden um die nötige Partialdruckdifferenz über die Permeattrennstufe (3) zu erzeugen.

Wie bereits erwähnt kann die erfindungsgemäße Steuerung so erfolgen, dass Permeatdruck der Feedstromtrennstufe (1) gleich dem Feeddruck der Permeattrennstufe (3) ist. Es ist aber auch möglich diese Drücke unterschiedlich auszugestalten. Dies kann z.B. dadurch erfolgen, dass man in den ersten Permeatstrom (6) ein Ventil als Steuereinrichtung (18a) einbaut mit dem der Permeatdruck der Feedstromtrennstufe (1) gesteuert wird und stromabwärts des Ventils (18a) in den ersten Permeatstrom (6) einen Kompressor einbaut oder im dritten Permeatstrom (11) eine Vakuumpumpe vorsieht. Mit einem Spülgasstrom in die Permeattrennstufe (3) könnte hier der Feedruck der Permeattrennstufe (3) in diesem Fall ebenfalls anders eingestellt werden als der Permeatdruck der Feedstromtrennstufe (1), welcher durch das Ventil (18a) gesteuert wird.

Die erfindungsgemäße Steuerung erlaubt somit eine sehr hohe Flexibilität, je nach dem, ob ein oder zwei Endprodukte erhalten werden sollen und in welchen Reinheiten diese benötigt werden.

Die Permeattrennstufe (3) produziert auf diese Weise ein Permeat mit einem Gehalt an besser permeabler Komponente A oder eines Permeatgases A größer als 95%, vorzugsweise größer als 97% und besonders vorzugsweise größer als 99%, welches über den dritten Permeatstrom (11) aus der Vorrichtung ausgeschleust wird. In einer besonders bevorzugten Ausführungsform ist die erfindungsgemäße Vorrichtung derart ausgestaltet, dass maximal 5%, bevorzugt maximal 3%, besonders bevorzugt maximal 1% und ganz besonders bevorzugt maximal 0,5 %, der mit dem Rohgasstrom (17) in die Vorrichtung eingeführten langsamer permeierenden Komponente B der Feedstromtrennstufe (1) über den dritten Permeatstrom (11) ausgeschleust werden.

Der Stufentrennschnitt der Permeattrennstufe (3) beträgt zwischen 50 und 95%, vorzugsweise zwischen 70 und 93%.

Der dritte Retentatstrom (10) wird bevorzugt rückgeführt, dem Feedstrom (5) zugeführt und wiederaufbereitet. Dies kann auf unterschiedliche Weise erfolgen und kann z. B. davon abhängen, ob ein Kompressor (4) oder gar ein mehrstufiger Kompressor (4) verwendet wird. Bei einem einstufigen Kompressor (4) wird der dritte Retentatstrom (10) bevorzugt der Saugseite des Kompressors (4) zugeführt, wenn der Ansaugdruck des Kompressors kleiner ist als der Retentatdruck der Trennstufe (3). Wird ein mehrstufiger Kompressor verwendet, so ist es bevorzugt, dass der dritte Retentatstrom (10) zwischen zwei Verdichtungsstufen in den Kompressor eingeführt wird, wenn der Stufendruck des Kompressor bei der jeweiligen Stufe kleiner ist als der Retentatdruck der Trennstufe (3).

Das erfindungsgemäße Verfahren bzw. die erfindungsgemäße Vorrichtung zeichnet sich in einer weiteren bevorzugten Ausführungsform besonders dadurch aus, dass es/sie derart ausgestaltet sind, dass das im zweiten Permeatstrom (9) und im dritten Retentatstrom (10) zurückgeführte Gasvolumen in Summe weniger als 60 Vol. %, bevorzugt 10 bis 50 Vol. %, ganz besonders bevorzugt 20 bis 40 Vol. % des Volumens des Rohgasstroms (17) beträgt. Die Steuerung der Menge der rückzuführenden Gasströme hängt von den geforderten Reinheiten in den Produktgasströmen (8) und (11) ab. Je geringer die angeforderten Reinheiten sind, umso geringer werden die Rückströme (9) und (10). Die Rückströme werden ganz besonders durch die Art und die Selektivität der eingesetzten Membranmodule in den Membrantrennstufen (1), (2) und optional (3) beeinflusst. Membranmodule mit erhöhter Selektivität bewirken dabei eine deutliche Senkung der Rückströme (9) und (10). Auch der Hauptdruck im System (= Druck in den Trennstufen (1) und (2)) beeinflussen die Menge an rückgeführten Gasen. Je höher der Druck im System ist, umso geringer werden die rückgeführten Mengen. Ein weiterer Einflussfaktor sind die Verhältnisse an Membranfläche in den einzelnen Stufen. Größere Flächen in der Trennstufe (3) verringern zum Beispiel die Rückströmung, größere Flächen in der Trennstufe (2) erhöhen hingegen die Rückströmungen. Somit zeichnet sich das erfindungsgemäße Verfahren bzw. die Vorrichtung dadurch aus, dass trotz sehr geringer Rückströme die oben näher erläuterte Erhöhung der Konzentration der Permeatkomponente im Feedstrom (5) sichergestellt wird. Dies erhöht deutlich die Effizienz des gesamten Verfahrens.

Wie bereits erläutert ist es besonders vorteilhaft wenn ein mehrstufiger Kompressor (4) eingesetzt wird. In diesem Fall kann nämlich auf eine komplette Entspannung des Retentats der Permeattrennstufe (3) verzichtet werden, da das Retentat der Permeattrennstufe (3) zwischen zwei Verdichterstufen des Kompressors (4) eingespeist werden kann.

Da die Retentattrennstufe (2) bei Entspannung auf Feeddruck im Regelfall im selektivitätslimitierten Bereich betrieben werden würde, kann es sinnvoll sein den zweiten Permeatstrom (9) lediglich auf ein höheres Druckniveau einer mehrstufigen Druckerhöhungseinheit, d.h. eines mehrstufigen Kompressors (4) zu entspannen da sich somit die Betriebskosten der Kompressionseinheit reduzieren ohne das Trennergebnis deutlich zu verschlechtern. In einer besonders bevorzugten Ausführungsform der vorliegenden Erfindung wird daher ein mehrstufiger Kompressor (4) verwendet und die Gasströme (9) und (10) diesem Kompressor jeweils zwischen zwei Kompressionsstufen zugeführt.

In einer bevorzugten Ausführungsform wird der Druckabfall über die Feedstromtrennstufe (1) auf 1 und 30 bar, vorzugsweise auf 2 und 20 bar und besonders vorzugsweise zwischen 3 und 10 bar beschränkt. Gleichzeitig oder alternativ wird bevorzugt sichergestellt, dass der Druckabfall über die Feedstromtrennstufe (1) und die Retentattrennstufe (2), auf 1 und 100 bar, vorzugsweise zwischen 5 und 80 bar und besonders vorzugsweise zwischen 10 und 70 bar beschränkt wird.

Die erfindungsgemäße Vorrichtung bzw. das erfindungsgemäße Verfahren kann im Prinzip mit allen Membranen realisiert werden, die in der Lage sind binäre Gasgemische oder Multigasgemische zu trennen. Als Membranmaterialien kommen bevorzugt aber nicht ausschließlich Kunststoffe zum Einsatz. Als Kunststoffe in der trennaktiven Schicht kommen besonders bevorzugt Polyimide, Polyamide, Polysulfone, Celluloseacetate und Derivate, Polyphenylenoxide, Polysiloxane, Polymere mit intrinsischer Mikroporosität, Mixed Matrix Membranen, Facilitated Transport Membranen, Polyethylenoxide, Polypropylenoxide, Kohlenstoffmembranen oder Zeolithe oder Mischungen daraus in Frage.

Besonders bevorzugte Membranen weisen als Materialien für die trennaktive Schicht bzw. als Material für die komplette Membran ein Polyimid der allgemeinen Formel

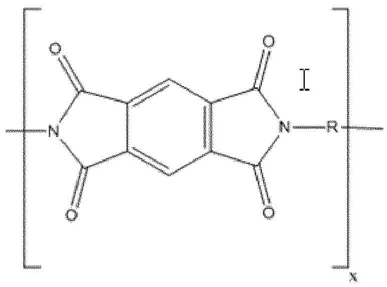

(A)

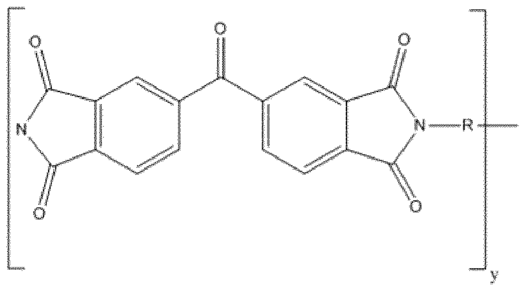

(B)

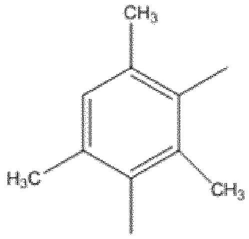

(L1)

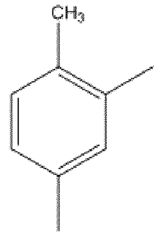

(L2)

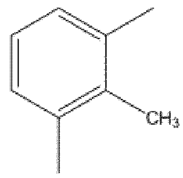

(L3)

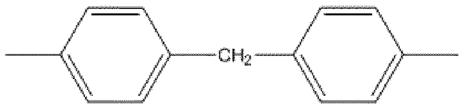

(L4)

mit $0 \leq x \leq 0,5$ und $1 \geq y \geq 0,5$ und R entspricht einem oder mehreren, gleichen oder unterschiedlichen Resten, ausgewählt aus der Gruppe bestehend aus den Resten L1, L2, L3 und L4, auf.

Besonders bevorzugt handelt es sich um ein Polymer mit x = 0, Y = 1 und R bestehend zu 64 mol % aus L2, zu 16 mol % aus L3 und zu 20 mol % aus L4. Dieses Polymer ist unter dem Namen P84 oder P84 Typ 70 (CAS- Nummern 9046-51-9) von der Firma Evonik Fibres GmbH erhältlich. Speziell bevorzugt wird ein Polymer mit der Zusammensetzung x = 0,4, y = 0,6 und R bestehend zu 80 mol % aus L2, zu 20 mol % aus L3 eingesetzt. Dieses Polymer ist unter dem Namen P84HT oder P84 HT 325 (CAS- Nummern 134119-41-8) von der Firma Evonik Fibres GmbH erhältlich. Ebenfalls bevorzugt können Mischungen besagter Polyimide verwendet werden.

Aus den bevorzugten Polyimiden hergestellte Membranen sind von der Firma Evonik Fibres GmbH unter dem Namen Sepuran erhältlich. Ein Verfahren zur Herstellung dieser bevorzugten Membranen wird in der WO 2011/009919 A1 offenbart. Sämtliche in dieser Offenlegungsschrift offenbarten Polyimide und Membranen können im erfindungsgemäßen Verfahren bevorzugt eingesetzt werden. Es wurde gefunden, dass mit diesen Membranen die besten Trennergebnisse erzielt werden können.

Die Membranen werden bevorzugt in Form von Hohlfasermembranen und / oder Flachmembranen verwendet. Die Membranen werden zu Modulen verbaut, die dann in der Trennaufgabe zum Einsatz kommen. Als Module können alle in der Technik bekannten Gasseparationsmodule wie zum Beispiel aber nicht ausschließlich Hohlfasergasseparationsmodule, Spiralwickelgasseparationsmodule, Kissengasseparationsmodule oder Rohrbündelgasseparationsmodule zum Einsatz kommen.

Die Gasseparationsmembranmodule haben erfindungsgemäß bevorzugt eine Gemischtgasselektivität von A ($CO_2$) zu B ($CH_4$) (= Verhältnis des Stoffstromes A zum Stoffstrom B über die Membran) von mindestens 30, bevorzugt mindestens 35, besonders bevorzugt mindestens 40, ganz besonders bevorzugt von mindestens 45 und speziell bevorzugt von mindestens 45 bis 80. Höher selektive Membranen haben den Vorteil, dass die Trennung effektiver wird und weniger Permeat aus Retentattrennstufe (2) bzw. weniger Retentat aus der Permeattrennstufe (3) rückgeführt werden muss. Damit muss insbesondere bei Verwendung eines einstufigen Kompressors (4) weniger Gas doppelt komprimiert werden, was wirtschaftliche Vorteile beim Betrieb der Anlage mit sich bringt. Bei sehr selektiven Membranmodulen mit einer Selektivität von 45 müssen nur ca. 35% des als Rohgas in die Feedstromtrennstufe (1) eingebrachten Gases doppelt komprimiert werden, mit einem Membranmodul mit einer Selektivität von nur 10 kann es sein, dass die Doppelkomprimierung bis zu 300% beträgt. Die Angaben 35% bzw. 300% beziehen sich auf Versuche, bei denen ein

Gasgemisches mit äquimolaren Mengen an Komponente A und B (= Feed) aufgegeben wurden, wobei 98,5% Komponente B im Retentatgas der Stufe(2) und 99% an Komponente B im Permeatstrom der Stufe (3) enthalten waren.

Es ist augenscheinlich, dass der erfindungsgemäße Prozess mit selektiveren Membranen wesentlich wirtschaftlicher geführt werden kann und die notwendige Größe des Kompressors und die benötigten Energie reduziert werden können.

Das erfindungsgemäße Verfahren / die erfindungsgemäße Vorrichtung hat insbesondere die Vorteile, dass es ein reines Membranverfahren ist und ohne zusätzliche Aufreinigung der Permeat- und/oder Retentatströme (8) und falls gewünscht (11) für viele Anwendungen auskommt. Man braucht zum Bespiel bei der Aufreinigung von Biogas oder Erdgas (= Abtrennung von Kohlendioxid aus Methan) keine Druckwechseladsorption oder Aminwäsche mehr zur Feinreinigung des Retentates, sodass dieses ins Erdgasnetz eingespeist werden kann.

Weiterhin kann mit dem erfindungsgemäßen Verfahren / der erfindungsgemäßen Vorrichtung gleichzeitig ein reiner Retentatstrom (8) und ein reiner Permeatstrom (11) bei der Bio- und Erdgasaufreinigung hergestellt werden. Es kann daher ohne große Verluste an Methan und ohne große Beeinträchtigung der Umwelt in die Atmosphäre entlassen werden, ohne dass das Gas noch weiter behandelt werden muss durch eine katalytische oder thermische Nachverbrennung oder eine Nutzung in einem Blockheizkraftwerk. Es entfällt daher die Investition in weitere Anlagenteile, was zu einem wirtschaftlicheren Aufreinigungsprozess für Bio- und Erdgas führt.

Die erfindungsgemäße Vorrichtung ist in großen Zügen bereits in der WO 2012/000727 beschrieben. Auch in der Masterarbeit von R. Borgmann, RWTH Aachen (1990) wird eine dreistufige Verschaltung vorgeschlagen.

In der WO 2012/000727 sowie der Masterarbeit werden keine Steuerung offenbart, die es erlauben würde Schwankungen der Zusammensetzung oder des Druckes oder des Flusses des Rohgasstromes auszugleichen. Die WO 2012/000727 offenbart lediglich die Variation der Kompressorleistung und allgemeine Druckbereiche welche eingehalten werden sollten um eine gute Ausbeuten und Reinheiten der Produktgase zu erhalten. Mit der vorliegenden Erfindung wird erstmal ein Steuerungs- und Regelungskonzept einer Membranverschaltung gemäß WO 2012/000727 offenbart, welche es erlaubt diese Aufreinigungsanlage auch an Biogasanlagen mit variablem Feedstrom direkt anzuschließen. Es kann daher auf spezielle Voreinrichtungen verzichtet werden, welche einen annähernd konstanten Rohgasstrom bereitstellen.

Die vorliegende Erfindung stellt eine bedeutende Weiterentwicklung der Anlage und des Verfahrens der WO 2012/000727 dar. Dies gilt insbesondere, da durch die Steuereinrichtungen (18a) bzw. (18b) und deren erfindungsgemäßer Regelung, eine konstante oder auch auf Grund wechselnder Anforderungen wechselnde Gasqualität des Produktgasstroms (8) garantiert werden kann, auch wenn sich die zu verarbeitende Menge an Rohgas (17) und/oder die herzustellende Menge an Produktgas (8) und/oder die Rohgaszusammensetzung ändert. Hierbei ist es vorteilhaft, dass sich zur Einhaltung der geforderten Gasqualitäten im Strom (8) der Hauptdruck im System (= Betriebsdruck in den Trennstufen (1) und (2)) und die Membraneflächen in den Trennstufen (1), (2) und optional (3) nicht geändert werden muss.

Ein weiterer Vorteil ist darin zu sehen, dass das erfindungsgemäße Verfahren / die erfindungsgemäße Vorrichtung mit deutlich geringerem apparativem und energetischen Aufwand auskommt wie die bekannten Verfahren des Standes der Technik.

Die erfindungsgemäße Vorrichtung bzw. das erfindungsgemäße Verfahren kann insbesondere zur Auftrennung von Gas- oder Dampfgemischen mit mindestens zwei Gasen eingesetzt werden, wobei ganz besonders bevorzugt als Gasgemisch eine Mischung von vorwiegend aber nicht ausschließlich Kohlendioxid und Methan oder vorwiegend aber nicht ausschließlich Wasserstoff und Methan oder vorwiegend aber nicht ausschließlich Kohlenmonooxid und Wasserstoff oder Rohbiogas oder Roherdgas aufgetrennt wird. "Vorwiegend aber nicht ausschließlich" bedeutet dabei, dass die genannten Gaspaare als Hauptbestandteile im Gasgemisch vorhanden sind, jedoch noch weitere Gase im Gemisch enthalten sein können.

Die nachfolgenden Beispiele sollen die vorliegende Erfindung näher erläutern und beschreiben, schränken diese jedoch in keiner Weise ein.

Meßmethoden:

Zur Bestimmung der Gemischtgasselektivität $CO_2/CH_4$ werden Membranmodule mit einer Mischung von 50% $CO_2$ und 50% $CH_4$ bei Raumtemperatur (23°C) im Feed betrieben. Die Zusammensetzung des Permeates und des Retentates werden hierbei bei verschiedenen Drücken (5, 10, 15, 20 bar(g) gemessen. Aus diesen Messungen lassen sich dann die Permeanzen des $CO_2$ und des $CH_4$ für den gesamten gemessenen Druckbereich (5 bis 20 bar) berechnen. Das Verhältnis dieser Permeanzen entspricht dann der Mischgas Selektivität.

**Beispiele**

**Allgemeine Beschreibung:**

Es wurde der Betrieb einer Gasseparationsanlage gemäß Abbildung 3 simuliert. Dazu wurde ein dynamisches

Modell eines Gasseparationsmoduls programmiert und in einer dynamischen Prozesssimulation angewendet. Die Prozessanalyse wurde unter Anwendung der Aspen Engineering Suite durchgeführt.

Bei der Durchführung der Simulation wurde ein Model zur Hohlfasergasseparation gemäß Scholz et al, "Modeling gas permeation by linking non-ideal effects", Industrial & Engineering Chemistry Research angewendet. Dieses Modell wurde abgepasst und die dynamischen Werte wurden zur Massenbilanzgleichung ergänzt. Folgende vereinfachende Vorgaben wurden zur Reduktion der Komplexität des Modells vorgenommen:

- konstante Permeanzen
- isotherme Operation und Ignorierung des Joule-Thomson Effekts
- Ignorierung der Polarisationskonzentration
- Annahme des idealen Gasverhaltens
- Annahme einer Kolbenströmung in den Hohlräumen und auf der Gehäuseseite der Module
- Annahme einer laminaren Strömung auf beiden Seiten der Membranen

Druckverluste wurden über die Hagen Poiseulle Gleichung berechnet.

Ein Gasseparationsmodel wurde im Aspen Custom Modeler programmiert, wo dynamische Simulationen durchgeführt werden können. Das Model wurde in ein Aspen Plus Prozessmodell überführt. Um die dynamische Simulation einer Biogasanlage ausführen zu können, wurde das Aspen Plus Fliesschema nach Aspen Dynamics exportiert. In Aspen Dynamics ist eine Modellbibliothek für verschiedene Reglertypen verfügbar, die den Regler zur Steuerung des Membranprozesses bereitstellt.

Die Massenbilanz ist die Basisgleichung welche gelöst werden musste. Die Massenbilanz für die Substanzen auf der Retentatseite für den Gegenstrom lautet gemäß Gleichung (I):

$$0 = \frac{\partial n_{R,i}}{\partial t} + \frac{\partial \dot{n}_{R,i}}{\partial x} dx + \dot{n}_{M,i} \qquad \text{(I)}$$

Dabei ist $n_{R,i}$ die Menge der Komponente i auf der Retentatseite und $\acute{n}_{R,i}$ ist die molare Flussrate die Menge der Komponente i auf der Retentatseite. $\acute{n}_{M,i}$ bezeichnet die molare Flussrate durch die Gasseparationsmembran.

Die entsprechende Gleichung für die Permeatseite der Membran im Gegenstrom lautet:

$$0 = \frac{\partial n_{P,i}}{\partial t} + \frac{\partial \dot{n}_{P,i}}{\partial x} dx + \dot{n}_{M,i}$$

Die Verweilzeit ist definiert als das Verhältnis des Volumens auf der Feedseite der Membran zur Volumenflussrate auf der Feedseite.

$$\tau = \frac{V}{\dot{V}}$$

Die Verweilzeiten auf der Retentat sowie auf der Permeatseite können berechnet werden.

**Beispiel 1:**

Verwendet wurde eine dreistufige Membranverschaltung gemäß Abbildung 3 mit folgenden Membranflächen: Feedstromtrennstufe (1) = 260 $m^2$, Retentattrennstufe (2) = 260 $m^2$ und Permeattrennstufe (3) = 390 $m^2$, jedoch ohne Regelung. Untersucht wurde folgendes Szenario:

Der Feedvolumenstrom (5) ist konstant und der Druck im ersten Permeatstrom (6) wird mittels eines Ventils (18b) im dritten Retentatstrom (10) variiert. Die sich verändernde Methankonzentration des Produktgases in Strom (8) wird aufgenommen.

Die Simulation wurde ohne eine Regelung der Anlage durchgeführt um das Verhalten des Aufbereitungsprozesses zu untersuchen.

Abbildung 4a zeigt den Methanstoffmengenanteil im Produktgasstrom (8) als Funktion des Drucks im ersten

Permeatstrom (6), der im folgenden Zwischendruck genannt wird. Bei einem Feedvolumenstrom von 192 $Nm^3/h$ beträgt der Zwischendruck etwa 2.74 bar (Methanreinheit im Produktgas 96%). Wird der Zwischendruck erhöht steigt zunächst die Methankonzentration im Produktgas an. Bei einem Zwischendruck von etwa 3 bar wird eine maximale Methankonzentration im Produktstrom erreicht.

Wird der Zwischendruck weiter erhöht, sinkt die Methankonzentration im Produktgas.

In Abbildung 4b sind die Rezirkulationsströme (9) und (10) der zweiten und dritten Membrantrennstufe in Abhängigkeit vom Zwischendruck dargestellt. Eine Erhöhung des Zwischendrucks hat einen starken Einfluss auf den dritten Retentatstrom (10). Bei einer Erhöhung des Zwischendrucks von 2.74 bar auf 3.5 bar reduziert sich der dritte Retentatstrom (10) um 90%. Dadurch erhöht sich der Methanstoffmengenanteil dieses Stroms. Da der dritte Retentatstrom (10) jedoch geringer wird, wird mit zunehmendem Zwischendruck der Einfluss auf die Feedkonzentration geringer.

Der zweite Permeatstrom (9) nimmt zunächst mit steigendem Zwischendruck ab und erreicht bei einem Zwischendruck von 3 bar ein Minimum. Dieser Strom wird von der Retentatkonzentration der Feedstromtrennstufe (1) beeinflusst. Da die Methankonzentration im Retentat der ersten Stufe mit steigendem Zwischendruck zunächst zunimmt, nimmt die Kohlenstoffdioxidkonzentation ab. Da das Retentat der ersten Stufe der Feedstrom der zweiten Stufe ist, nimmt die Feedkonzentration an Kohlenstoffdioxid in der zweiten Stufe ab, so dass sich der permeierende Stoffstrom reduziert.

Abbildung 4a zeigt somit, dass man je nachdem bei welchem Druck das Membrantrennsystem betrieben wird und wo dadurch der Zwischendruck liegt auf eine Absenkung der Methankonzentration im Produktstrom (8), z. B. ausgelöst durch eine Veränderung der Zusammensetzung des Feedstroms, mit einer Erhöhung oder Verringerung des Zwischendrucks, d.h. des Drucks des ersten Permeatstroms (6) reagiert werden muss.

**Beispiel 2:** Veränderung der Zusammensetzung des Feedstroms (5)

Verwendet wurde eine dreistufige Membranverschaltung gemäß Abbildung 3 mit folgenden Membranflächen: Feedstromtrennstufe (1) = 520 $m^2$, Retentattrennstufe (2) = 520 $m^2$ und Permeattrennstufe (3) = 780 $m^2$, jedoch wurde bei dieser Simulation ein PID controller verwendet. Es wurde ein binäres Gasgemisch aus $CO_2$ und $CH_4$ getrennt. 2 Sekunden nach Erreichung des Gleichgewichtszustands wurde der Methangehalt im Feedgasstrom, innerhalb von 3 Sekunden, von 50 auf 45 mol% reduziert (siehe Abbildung 5a). Abbildung 5b zeigt, dass dadurch der Gehalt an Methan im zweiten Retentatstrom (8) ohne Gegensteuerung (durchgezogene Linie in Abbildung 5b)ansteigen würde.

Durch partielles Schließen eines Druckminderventils im dritten Retentatstrom (Steuereinrichtung (18b)) wurde der Druck im ersten Permeatstrom (6) von 4 auf 4,7 bar erhöht (siehe gestrichelte Linie in Abbildung 5c). Die durchgezogene Linie in 5c zeigt, dass der Druck im 1. Permeatstrom ohne Gegensteuerung leicht ansteigen würde. Wie aus der gestrichelten Linie Abbildung 5b hervorgeht führte die Gegensteuerung dazu, dass die ursprüngliche Zusammensetzung des zweiten Retentatstroms (8) (Produktstrom) wieder hergestellt und somit die Tauglichkeit des erfindungsgemäßen Verfahrens unter Beweis gestellt wurde. Besonders bemerkenswert ist (siehe Abbildung 5b), dass innerhalb von 15s wieder die gewünschte Konzentration im Produktstrom (8) erreicht wurde. Dies zeigt, dass das erfindungsgemäße Regelungskonzept sehr schnell regelt.

**Beispiel 3:** Erhöhung der Flussrate des Feedstroms (5)

Die Simulation wurde analog Beispiel 2 durchgeführt. Diesmal wurde jedoch innerhalb von 5 Sekunden die Flussrate des Feedstroms von 11,72 kmol/h auf 12 kmol/h erhöht (siehe Abbildung 6a). Abbildung 6b, durchgezogene Linie zeigt, dass ohne Gegensteuerung der Gehalt an Methan im zweiten Retentatstrom (8) stark sinken würde.

Durch partielles Öffnen eines Druckminderventils im dritten Retentatstrom wurde der Druck im ersten Permeatstrom (6) von 4 auf 3,75 bar gesenkt (siehe Abbildung 6c, gestrichelte Linie). Wie aus Abbildung 6b, gestrichelte Linie, hervorgeht führte dies dazu, dass die ursprüngliche Zusammensetzung des zweiten Retentatstroms (8) (Produktstrom) wieder hergestellt und somit die Tauglichkeit des erfindungsgemäßen Verfahrens auch in diesem Fall unter Beweis gestellt wurde.

**Beispiel 4:** Verringerung der Flussrate des Feedstroms (5)

Auch diese Simulation wurde analog Beispiel 2 durchgeführt. Diesmal wurde die Flussrate des Feedstroms von 11,72 kmol/h auf 11,3 kmol/h verringert (siehe Abbildung 7a). Abbildung 7b, durchgezogene Linie, zeigt, dass dadurch und ohne Gegensteuerung der Gehalt an Methan im zweiten Retentatstrom (8) ansteigen würde. Dies ist jedoch ineffizient, da lediglich eine Methanreinheit von 96 mol % benötigt wird.

Durch partielles Schließen eines Druckminderventils im dritten Retentatstrom (Steuereinrichtung (18b)) wurde der Druck im ersten Permeatstrom (6) von 4 auf 4,4 bar erhöht (siehe Abbildung 7c, gestrichelte Linie). Die durchgezogene Linie in Abbildung 7c zeigt den Druckverlauf der ersten Permeatstroms ohne Gegensteuerung. Wie aus Abbildung 7b,

gestrichelte Linie, hervorgeht führte das Gegensteuern dazu, dass die ursprüngliche Zusammensetzung des zweiten Retentatstroms (8) (Produktstrom) wieder hergestellt und somit die Tauglichkeit des erfindungsgemäßen Verfahrens auch in diesem Fall unter Beweis gestellt wurde.

Beschreibung der Abbildungen

Abb.1:

Beispielhafte erfindungsgemäße Verschaltung mit den Messeinrichtungen (19a) und (19b) sowie der Steuereinrichtungen (18a). In Abbildung 1 wird eine erfindungsgemäße Anordnung mit nur zwei Membrantrennstufen und ohne Rückführung der Ströme (6) und (9) gezeigt. Ein PID-Controller ist nicht eingezeichnet, kann aber vorzugsweise auch verwendet werden.

Abb. 2:

Beispielhafte erfindungsgemäße Verschaltung mit den Messeinrichtungen (19a) und (19b) sowie der Steuereinrichtungen (18a). In Abbildung 2 wird eine erfindungsgemäße Anordnung mit nur zwei Membrantrennstufen und Rückführung des zweiten Permeatstroms (9) auf die Saugseite des Kompressors gezeigt. Alternative in der obigen Beschreibung erläuterte Anordnungen wie z. B. die Rückführung des Stroms (9) in eine erhöhte Kompressionsstufe des Kompressors (4) sind für einen Fachmann leicht als Abwandlung von Abbildung 2 ableitbar und werden daher nicht separat gezeigt. Ein PID-Controller ist nicht eingezeichnet, kann aber vorzugsweise auch verwendet werden.

Abb. 3:

In Abbildung 3 wird eine erfindungsgemäße Anordnung mit drei Membrantrennstufen und mit der Rückführung der Ströme (9) und (10) auf die Saugseite des Kompressors gezeigt. Alternative in der obigen Beschreibung erläuterte Anordnungen wie z. B. die Rückführung einer oder mehrerer der Ströme (9) oder (10) in eine erhöhte Kompressionsstufe des Kompressors (4) oder mit nur einer Messeinrichtung (19a) oder (19b) oder mit nur einer Steuereinrichtung (18a) oder (18b) sind für einen Fachmann leicht als Abwandlung von Abbildung 3 ableitbar und werden daher nicht separat gezeigt. Gezeigt ist die bevorzugte Ausführungsform mit PID-Controller.

Abb. 4a und 4b:

In diesen Abbildungen wird gemäß Beispiel 1 die Auswirkung einer Veränderung des Drucks des ersten Permeatstroms bei konstantem Feedstrom und konstantem Flächenverhältnis der Membrantrennstufen auf die Konzentration von Methan im Produktstrom (8) (Abbildung 4a) und auf die Recyclingströme (9) und (10) (Abbildung 4b) gezeigt.

Abb. 5a, 5b und 5c:

In diesen Abbildung wird gemäß Beispiel 2 gezeigt, wie mittels erfindungsgemäßer Regelung des Druckes des ersten Permeatstroms (6) einer Veränderung der Zusammensetzung des Produktstroms (8), ausgelöst durch eine Veränderung der Zusammensetzung des Feedstroms, entgegengewirkt werden kann. 5a zeigt die Veränderung der Zusammensetzung des Feedstroms. 5b zeigt die Veränderung der Zusammensetzung des Produktstroms (8) ohne Gegensteuerung (durchgezogene Linie) bzw. mit Gegensteuerung (gestrichelte Linie). 5c zeigt die Druckverläufe des ersten Permeatstroms (6) ohne Gegensteuerung (durchgezogene Linie) bzw. mit Gegensteuerung (gestrichelte Linie).

Abb. 6a, 6b und 6c:

In diesen Abbildung wird gemäß Beispiel 3 gezeigt, wie mittels erfindungsgemäßer Regelung des Druckes des ersten Permeatstroms (6) einer Veränderung der Zusammensetzung des Produktstroms (8), ausgelöst durch eine Erhöhung der Flussrate des Feedstroms, entgegengewirkt werden kann. 6a zeigt die Veränderung der Flussrate des Feedstroms. 6b zeigt die Veränderung der Zusammensetzung des Produktstroms (8) ohne Gegensteuerung (durchgezogene Linie) bzw. mit Gegensteuerung (gestrichelte Linie). 6c zeigt die Druckverläufe des ersten Permeatstroms (6) ohne Gegensteuerung (durchgezogene Linie) bzw. mit Gegensteuerung (gestrichelte Linie).

Abb. 7a, 7b und 7c:

In diesen Abbildung wird gemäß Beispiel 4 gezeigt, wie mittels erfindungsgemäßer Regelung des Druckes des

ersten Permeatstroms (6) einer Veränderung der Zusammensetzung des Produktstroms (8), ausgelöst durch eine Verringerung der Flussrate des Feedstroms, entgegengewirkt werden kann. 7a zeigt die Veränderung der Flussrate des Feedstroms. 7b zeigt die Veränderung der Zusammensetzung des Produktstroms (8) ohne Gegensteuerung (durchgezogene Linie) bzw. mit Gegensteuerung (gestrichelte Linie). 7c zeigt die Druckverläufe des ersten Permeatstroms (6) ohne Gegensteuerung (durchgezogene Linie) bzw. mit Gegensteuerung (gestrichelte Linie).

Bezugszeichenliste:

- 1: Feedstromtrennstufe
- 2: Retentattrennstufe
- 3: optionale Permeattrennstufe
- 4: einstufiger oder mehrstufiger Kompressor
- 5: Feedstrom
- 6: erster Permeatstrom
- 7: erster Retentatstrom
- 8: zweiter Retentatstrom
- 9: zweiter Permeatstrom
- 10: optional: dritter Retentatstrom
- 11: optional: dritter Permeatstrom
- 12: Optionales Druckminderventil im ersten Retentatstrom 7 (in den Abbildungen nicht wiedergegeben)
- 13: Optionales Druckminderventil im zweiten Retentatstrom 8 (in den Abbildungen nicht wiedergegeben)
- 14: Optionales Druckminderventil im dritten Retentatstrom 10 (in den Abbildungen nicht wiedergegeben)
- 15: Vakuumpumpe (in den Abbildungen nicht wiedergegeben)
- 16: Mischkammer (in den Abbildungen nicht wiedergegeben)
- 17: Rohgasstrom
- 18a: Die Permeatsteuereinrichtung (18a) ist eine Einrichtungen zur Steuerung des Drucks im ersten Permeatstrom (6), welche im 1. Permeatstrom (6) angeordnet ist (in der Beschreibung auch einfach als Steuereinrichtung (18a) bezeichnet).
- 18b: Die Retentatsteuereinrichtung (18b) ist eine Einrichtungen zur Steuerung des Drucks im ersten Permeatstrom (6), welche im dritten Retentatstrom (10) angeordnet ist (in der Beschreibung auch einfach als Steuereinrichtung (18b) bezeichnet).
- 19a: Feedstrommesseinrichtung zur Analyse des Feedstroms (5) und/oder Rohgasstroms (17) (in der Beschreibung auch einfach als Messeinrichtung (19a) bezeichnet)
- 19b: Retentatstrommesseinrichtung zur Analyse des 2. Retentatstroms (8)(in der Beschreibung auch einfach als Messeinrichtung (19b) bezeichnet)

## Patentansprüche

**1.** Vorrichtung zur Trennung von Gasen umfassend als Membrantrennstufen zumindest eine Feedstromtrennstufe (1), und eine Retentattrennstufe (2) sowie zumindest einen, auf der Feedseite der Feedstromtrennstufe (1) angeordneten, Kompressor (4) und/oder zumindest eine, bevorzugt eine oder zwei, Vakuumpumpe(n), die derart angeordnet sind, dass sie eine Partialdruckdifferenz zwischen der Retentat- und Permeatseite der Membran erzeugen, wob ei

der Feedstromtrennstufe (1) ein Feedstrom (5) zugeführt wird, der aus mindestens zwei Komponenten besteht und der dem Rohgasstrom (17) entspricht oder der aus den Gasen des Rohgasstroms (17) und des zurückgeführten zweiten Permeatstroms (9) zusammengesetzt ist,
die Feedstromtrennstufe (1) den Feedstrom (5) in einen ersten Permeatstrom (6), der verworfen oder als zweiter Produktstrom entnommen oder weiterverarbeitet wird, und einen ersten Retentatstrom (7) auftrennt,
die Retentattrennstufe (2) den ersten Retentatstrom (7) in einen zweiten Permeatstrom (9) und einen zweiten Retentatstrom (8), der als Produkt entnommen oder weiterverarbeitet wird, aufteilt,
**dadurch gekennzeichnet, dass**
die Vorrichtung eine Permeatsteuereinrichtung (18a) umfasst mit der der Permeatdruck der Feedstromtrennstufe (1) erhöht oder erniedrigt werden kann und welche anhand von Messwerten eines oder mehrerer Feedstrommesseinrichtungen (19a) im Feedstrom (5) und/oder im Rohgasstrom (17) und/oder eines oder mehrerer

Retentatstrommesseinrichtungen (19b) im zweiten Retentatstrom (8), gesteuert wird.

2. Vorrichtung zur Trennung von Gasen nach Anspruch 1, umfassend zumindest eine zusätzliche Permeattrennstufe (3), wobei

der Feedstromtrennstufe (1) ein Feedstrom (5) zugeführt wird, der aus mindestens zwei Komponenten besteht und der dem Rohgasstrom (17) entspricht oder der aus den Gasen des Rohgasstroms (17), sowie des zurückgeführten zweiten Permeatstroms (9) und/oder des zurückgeführten dritten Retentatstroms (10) zusammengesetzt ist,
die Permeattrennstufe (3) den ersten Permeatstrom (6), in einen dritten Retentatstrom (10) und einen dritten Permeatstrom (11), der verworfen, oder als Produkt entnommen oder weiterverarbeitet wird auftrennt, und
wobei der Permeatdruck der Feedstromtrennstufe (1) durch eine Permeatsteuereinrichtung (18a) im ersten Permeatstrom und/oder durch eine Retentatsteuereinrichtung (18b) im dritten Retentatstrom (10) erhöht oder erniedrigt werden kann, und
wobei die Permeatsteuereinrichtung/en (18a) und/oder die Retentatsteuereinrichtung/en(18b) anhand von Messwerten eines oder mehrerer Feedstrommesseinrichtungen (19a) im ersten Feedstrom (5) und/oder im Rohgasstrom (17) und/oder eines oder mehrerer Retentatstrommesseinrichtungen (19b) im zweiten Retentatstrom (8) gesteuert wird/werden.

3. Vorrichtung nach einem der Ansprüche 1 oder 2,
**dadurch gekennzeichnet,**
**dass**
mindestens eine der Membrantrennstufen (1) bis (3) mehrere Gasseparationsmembranmodule umfasst, welche parallel und/oder seriell verschaltet sind, und/oder
das/die Gasseparationsmembranmodul(e) Hohlfasermembranen und/oder Flachmembranen umfassen.

4. Vorrichtung nach einem der Ansprüche 1 bis 3,
**dadurch gekennzeichnet,**

**dass** in der Vorrichtung ein Kompressor (4) vorhanden ist, wobei der zweite Permeatstrom (9) und/oder der dritte Retentatstrom (10) auf die Saugseite des Kompressors (4) zur Wideraufbereitung geleitet werden oder
**dass** in der Vorrichtung ein mehrstufiger Kompressor (4) vorhanden ist, wobei bevorzugt der zweite Permeatstrom (9) und /oder der dritte Retentatstrom (10) zwischen zwei Verdichtungsstufen in den Kompressor (4) eingeführt wird/werden.

5. Vorrichtung nach einem der Ansprüche 1 bis 4,
**dadurch gekennzeichnet,**

**dass** in der Vorrichtung ein Kompressor (4) vorhanden ist, und
**dass** der Kompressor (4) in der Vorrichtung derart angeordnet ist, dass er ein Druckgefälle in der Feedstromtrennstufe (1) erzeugt,
und/oder
**dass** die Vorrichtung eine Kontrolleinrichtung umfasst, welche die Leistung des Kompressors (4), bevorzugt dessen Drehzahl, an Veränderungen des zweiten Permeatstroms (9)und/oder des dritten Retentatstroms (10)und/oder des Rohgasstroms (17) anpasst, wobei die Kontrolleinrichtung anhand von Messwerten aus Messeinrichtungen in den jeweiligen Strömen gesteuert wird.

6. Vorrichtung nach einem der Ansprüche 1 bis 5,
**dadurch gekennzeichnet,**

**dass** im Feedstrom (5) Durchflussmesser als Messeinrichtung verwendet werden
oder
**dass** im zweiten Retentatstrom (8) eine online oder offline Messeinrichtung zur Bestimmung der Zusammensetzung des jeweiligen Gasgemisches verwendet wird

und/oder
**dass** ein PID-Controller enthalten ist, der die Daten der Retentatstrommesseinrichtung (19b) und/oder der Feedstrommesseinrichtung(19a) verarbeitet und die Permeatsteuereinrichtung (18a) und / oder die Retentatsteuereinrichtung (18b) steuert.

**7.** Vorrichtung nach einem der Ansprüche 1 bis 6,
**dadurch gekennzeichnet,**
**dass** als Materialien für die trennaktive Schicht der Membranen amorphe oder teilkristalline Kunststoffe verwendet werden wie zum Beispiel aber nicht ausschließlich Polyimide, Polyamide, Polysulfone, Celluloseacetate und Derivate, Polyphenylenoxide, Polysiloxane, Polymere mit intrinsischer Mikroporosität, Mixed Matrix Membranen, Facilitated Transport Membranen, Polyethylenoxide, Polypropylenoxide oder Mischungen daraus.

**8.** Vorrichtung nach Anspruch 7,
**dadurch gekennzeichnet,**
**dass** als Material für die trennaktive Schicht der Membranen ein Polyimid der allgemeinen Formel

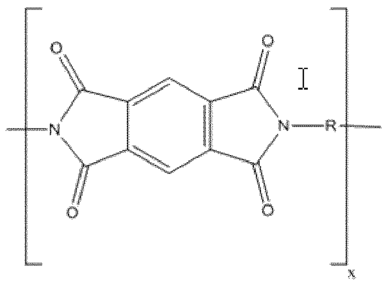

(A)

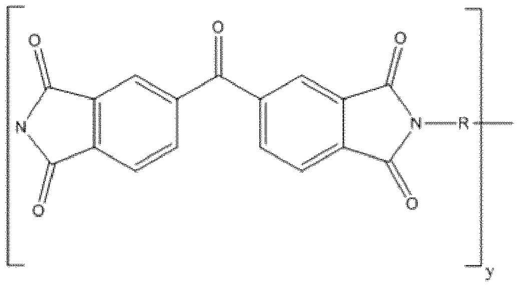

(B)

mit $0 \leq x \leq 0{,}5$ und $1 \geq y \geq 0{,}5$ verwendet wird, wobei R einem oder mehreren, gleichen oder unterschiedlichen Resten ausgewählt aus der Gruppe bestehend aus den Resten L1, L2, L3 und L4

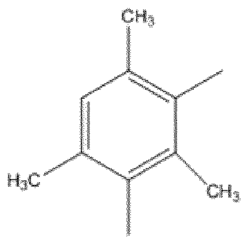

(L1)

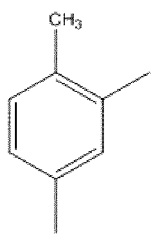

(L2)

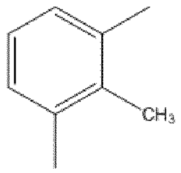

(L3)

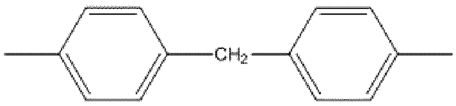

(L4)

entspricht.

9. Verfahren zur Steuerung einer Gasseparationsanlage nach einem der Ansprüche 1 bis 8,
**dadurch gekennzeichnet,**

- **dass** mit der Retentatstrommesseinrichtung (19b) eine Veränderung der Zusammensetzung des zweiten Retentatstroms (8) und/oder mit der Feedstrommesseinrichtung (19a) eine Veränderung des Flusses oder der Zusammensetzung des Feedstroms (5) und/oder des Rohgasstroms (17) gemessen wird, und
- **dass** abhängig von den Messwerten der Retentatstrommesseinrichtung (19b) und/oder Feedstrommesseinrichtung (19a) eine Erhöhung oder Erniedrigung des Drucks im ersten Permeatstrom (6) mittels der Permeatsteuereinrichtung (18a) und/oder der Retentatsteuereinrichtung (18b) durchgeführt wird.

10. Verfahren nach Anspruch 9,
**dadurch gekennzeichnet,**
**dass** vor Beginn des Betriebs der Gasseparationsanlage ein iterativer Versuch oder eine Prozesssimulation durchgeführt wird wobei ermittelt wird, ob einer Veränderung der Zusammensetzung des Produktstroms (8) bzw. des Feed- (5) oder Rohgasstroms (17) bzw. einer Veränderung des Flusses des Feed- (5) bzw. Rohgasstroms (17) mittels einer Erhöhung oder einer Verringerung des Drucks im ersten Permeatstrom (6) mit Hilfe der Permeatsteuereinrichtung (18a) und/oder der Retentatsteuereinrichtung (18b) entgegengewirkt werden kann.

11. Verfahren nach einem der Ansprüche 9 oder 10,
**dadurch gekennzeichnet,**
**dass** die Steuerung nach einer oder mehreren der nachfolgenden Vorschriften erfolgt:

i. die Konzentration einer schwerer permeierenden Komponente B des zweiten Retentatstroms (8), ermittelt mittels der Retentatstrommesseinrichtung (19b), fällt unter einen vorgegebenen Sollwert, der Druck des ersten Permeatstroms (6) wird mittels der Permeatsteuereinrichtung (18a) und/oder der Retentatsteuereinrichtung (18b) erhöht oder verringert, bis besagte Konzentration, wieder im Sollbereich liegt,
ii. die Konzentration einer schwerer permeierenden Komponente B des zweiten Retentatstroms (8), ermittelt mittels der Retentatstrommesseinrichtung (19b), steigt über einen vorgegebenen Sollwert, der Druck des ersten Permeatstroms (6) wird mittels der Permeatsteuereinrichtung (18a) und/oder der Retentatsteuereinrichtung (18b) erhöht oder verringert, bis besagte Konzentration, wieder im Sollbereich liegt,
iii. der Volumenstrom des Feedstroms (5), ermittelt mittels der Feedstrommesseinrichtung (19a), steigt, der Druck des ersten Permeatstroms (6) wird mittels der Permeatsteuereinrichtung (18a) und/oder der Retentatsteuereinrichtung (18b) soweit erhöht oder verringert bis die Zusammensetzung oder der Druck oder der Volumenstrom des zweiten Retentatstroms (8), bevorzugt die Zusammensetzung des zweiten Retentatstroms (8), wieder im Sollbereich liegt,
iv. der Volumenstrom des Feedstroms (5), ermittelt mittels der Feedstrommesseinrichtung (19a), fällt, der Druck des ersten Permeatstroms (6) wird mittels der Permeatsteuereinrichtung (18a) und/oder der Retentatsteuereinrichtung (18b) soweit erhöht oder verringert bis die Zusammensetzung oder der Druck oder der Volumenstrom des zweiten Retentatstroms (8), wieder im Sollbereich liegt,
v. die Konzentration einer schwerer permeierenden Komponente B des Feedstroms (5) oder des Rohgasstroms (17), ermittelt mittels der Feedstrommesseinrichtung (19a), steigt, der Druck des ersten Permeatstroms (6) wird mittels der Permeatsteuereinrichtung (18a) und/oder der Retentatsteuereinrichtung (18b) erniedrigt bis die Zusammensetzung oder der Druck oder der Volumenstrom des zweiten Retentatstroms (8), wieder im Sollbereich liegt,

vi. die Konzentration einer schwerer permeierenden Komponente B des Feedstroms (5) oder des Rohgasstroms (17), ermittelt mittels der Feedstrommesseinrichtung (19a), sinkt, der Druck des ersten Permeatstroms (6) wird mittels der Permeatsteuereinrichtung (18a) und/oder der Retentatsteuereinrichtung (18b) erniedrigt bis die Zusammensetzung oder der Druck oder der Volumenstrom des zweiten Retentatstroms (8), wieder im Sollbereich liegt.

**12.** Verfahren nach einem der Ansprüche 9 bis 11,
**dadurch gekennzeichnet,**

**dass** der Druckabfall über die Feedstromtrennstufe (1) auf 1 bis 30 bar, vorzugsweise auf 2 bis 20 bar und besonders vorzugsweise auf 3 und 10 bar eingestellt wird und/oder
**dass** der Druckabfall über die Feedstromtrennstufe (1) und die Retentattrennstufe (2) auf 1 bis 100 bar, vorzugsweise auf 5 bis 80 bar und besonders vorzugsweise auf 10 bis 70 bar eingestellt wird.

**13.** Verfahren nach einem der Ansprüche 9 bis 12,
**dadurch gekennzeichnet,**

**dass** als Triebkraft für die Trennaufgabe eine Partialdruckdifferenz zwischen der Retentat- und der Permeatseite in den jeweiligen Membrantrennstufen zum Einsatz kommt, wobei die Partialdruckdifferenz mittels eines Kompressors (4), welcher auf der Feedseite der Feedstromtrennstufe (1) angeordnet ist, und gegebenenfalls mittels zumindest einer, bevorzugt einer oder zwei Vakuumpumpe(n) im zweiten und/oder dritten Permeatstrom (9) und / oder (11) und/oder durch einen permeatseitigen Spülgasstrom erzeugt wird
und/oder
**dass** der Druck des Permeats der Feedstromtrennstufe (1) gleich oder erhöht ist gegenüber dem Umgebungsdruck, sodass noch eine Partialdruckdifferenz zwischen Retentat und Permeat der Permeattrennstufe (3) besteht und damit eine treibende Kraft gegeben ist für den Fall, dass das Permeat der Permeattrennstufe (3) auf Umgebungsdruck ist oder Unterdruck angelegt wird.

**14.** Verfahren nach einem der Ansprüche 9 bis 13,
**dadurch gekennzeichnet,**

**dass** mittels einer Kontrolleinrichtung, die Leistung des Kompressors (4), bevorzugt dessen Drehzahl, an Veränderungen des zweiten Permeatstroms (9) und/oder des dritten Retentatstroms (10) und/oder des Rohgasstroms (17) angepasst wird, wobei die Kontrolleinrichtung anhand von Messwerten aus Messeinrichtungen in den jeweiligen Strömen gesteuert wird,
oder
**dass** das Verfahren derart ausgestaltet ist, dass sich ändernde Mengen an rückgeführtem Gas aus dem zweiten Permeatstrom (9) und/oder dem dritten Retentatstrom (10), bevorzugt automatisch, mit einer Regelung der zugeführten Menge an Rohgas, bevorzugt über eine Rohgassteuereinrichtung, ausgeglichen werden, bevorzugt ohne die Drehzahl des Kompressors zu ändern
oder
**dass** die Anlagenleistung der erfindungsgemäßen Anlage durch eine Änderung des Fördervolumens des Kompressors (4) erhöht oder erniedrigt wird, wobei
einer dadurch verursachten Änderung der Konzentration der schwerer permeierenden Komponente B im zweiten Retentatstrom (8) gemäß den Verfahrensalternativen (i) bzw. (ii) und/oder
einer dadurch verursachten Änderung des Flusses des Feedstroms (5) gemäß den Verfahrensalternativen (iii) bzw. (iv)
entgegengewirkt wird.

**15.** Verfahren nach einem der Ansprüche 9 bis 14, **dadurch gekennzeichnet,**

**dass** es im Rahmen des Betriebs einer Biogasanlage durchgeführt wird und dass je nach Füllstand der Biogasanlage, bevorzugt ermittelt über Druck des Fermenters oder den Füllstand eines Zwischenspeichers, die Drehzahl des Kompressors und damit das Fördervolumen des Kompressors (4) gesteuert wird, um den Füllstand im Fermenter und/oder Zwischenspeicher zu verändern oder konstant zu halten
und/oder
**dass** als Gasgemisch eine Mischung die als Hauptbestandteile Kohlendioxid und Methan oder Wasserstoff und Methan oder Kohlenmonooxid und Wasserstoff enthält oder Rohbiogas oder Roherdgas verwendet wird.

**Claims**

1. Apparatus for separating gases, comprising as membrane separation stages at least a feed stream separation stage (1) and a retentate separation stage (2) and also at least one compressor (4) arranged on the feed side of the feed stream separation stage (1) and/or at least one, preferably one or two, vacuum pumps (s) which are arranged such that they generate a partial pressure difference between the retentate side and permeate side of the membrane, wherein
the feed stream separation stage (1) is supplied with a feed stream (5), which consists of at least two components and corresponds to the raw gas stream (17) or is composed of the gases of the raw gas stream (17) and of the recycled second permeate stream (9),
the feed stream separation stage (1) separates the feed stream (5), into a first permeate stream (6), which is either discarded or withdrawn as second product stream or further processed, and a first retentate stream (7),
and the retentate separation stage (2) separates the first retentate stream (7) into a second permeate stream (9) and a second retentate stream (8), which is withdrawn as product or further processed,
**characterized in that**
the apparatus comprises a permeate control means (18a) with which the permeate pressure of the feed stream separation stage (1) can be raised or lowered and which is controlled on the basis of measured values from one or more feed stream measuring means (19a) in the feed stream (5) and/or in the raw gas stream (17) and/or one or more retentate stream measuring means (19b) in the second retentate stream (8).

2. Apparatus for separating gases according to Claim 1, comprising at least one additional permeate separation state (3), wherein
the feed stream separation stage (1) is supplied with a feed stream (5), which consists of at least two components and corresponds to the raw gas stream (17) or is composed of the gases of the raw gas stream (17), and of the recycled second permeate stream (9) and/or of the recycled third retentate stream (10),
the permeate separation stage (3) divides the first permeate stream (6) into a third retentate stream (10) and a third permeate stream (11), which is either discarded or withdrawn as product or further processed, and
wherein the permeate pressure of feed stream separation stage (1) can be raised or lowered by a permeate control means (18a) in the first permeate stream and/or by a retentate control means (18b) in the third retentate stream (10), and
wherein the permeate control means (18a) and/or the retentate control means (18b) are controlled on the basis of measured values from one or more feed stream measuring means (19a) in the first feed stream (5) and/or in the raw gas stream (17) and/or one or more retentate stream measuring means (19b) in the second retentate stream (8).

3. Apparatus according to either of Claims 1 or 2,
**characterized**
**in that**
at least one of the membrane separation stages (1) to (3) comprises two or more gas separation membrane modules interconnected in parallel and/or in series,
and/or
the gas separation membrane module (s) comprise (s) hollow fiber membranes and/or flat membranes.

4. Apparatus according to any of Claims 1 to 3,
**characterized**
**in that** a compressor (4) is present in the apparatus, wherein the second permeate stream (9) and/or the third retentate stream (10) are recycled to the suction side of the compressor (4), for reprocessing
or
**in that** a multi-stage compressor (4) is present in the apparatus, wherein preferably the second permeate stream (9) and/or the third retentate stream (10) is/are introduced into the compressor (4) between two compression stages.

5. Apparatus according to any of Claims 1 to 4,
**characterized**
**in that** a compressor (4) is present in the apparatus, and
**in that** the compressor (4) is arranged in the apparatus such that it generates a pressure gradient in the feed stream separation stage (1), and/or
**in that** the apparatus comprises a controller means which adapts the power requirements of the compressor (4), preferably its rotary speed, to changes in the second permeate stream (9) and/or the third retentate stream (10) and/or the raw gas stream (17), wherein the controller means is controlled on the basis of measured values from

measuring means in the respective streams.

6. Apparatus according to any of Claims 1 to 5,
**characterized**
**in that** flow meters are used as measuring means in the feed stream (5)
or
**in that** an on-line or off-line measuring means is used in the second retentate stream (8) for determining the composition of the particular gas mixture
and/or
**in that** there is comprised a PID controller to process the data from the retentate stream measuring means (19b) and/or the feed stream measuring means (19a) and to control the permeate control means (18a) and/or the retentate control means (18b).

7. Apparatus according to any of Claims 1 to 6,
**characterized**
**in that** the materials used for the separation-active layer of the membranes are amorphous or partly crystalline plastics such as, for example but not exclusively, polyimides, polyamides, polysulphones, cellulose acetates and derivatives, polyphenylene oxides, polysiloxanes, polymers having intrinsic microporosity, mixed matrix membranes, facilitated transport membranes, polyethylene oxides, polypropylene oxides or mixtures thereof.

8. Apparatus according to Claim 7,
**characterized**
**in that** the material used for the separation-active layer of the membranes is a polyimide of the general formula

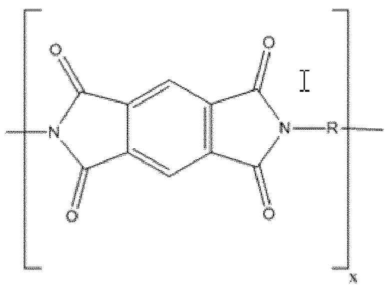

(A)

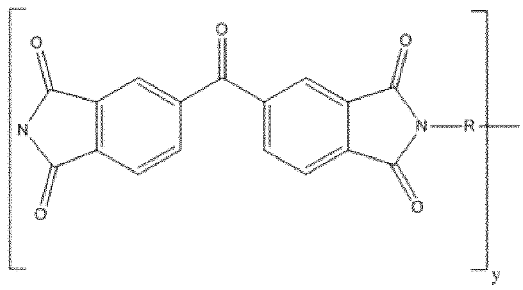

(B)

where $0 \leq x \leq 0.5$ and $1 \geq y \geq 0.5$, wherein R corresponds to one or more, identical or different radicals selected from the group consisting of the radicals L1, L2, L3 and L4

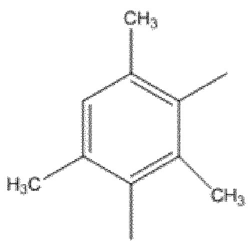

(L1)

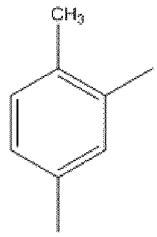

(L2)

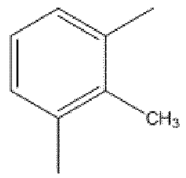

(L3)

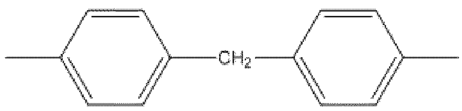

(L4)

.

**9.** Method of controlling a gas separation plant according to any of Claims 1 to 8,
**characterized**

- **in that** the retentate stream measuring means (19b) is used to measure a change in the composition of the second retentate stream (8) and/or the feed stream measuring means (19a) is used to measure a change in the flow or composition of feed stream (5) and/or of raw gas stream (17), and
- **in that** the pressure in the first permeate stream (6) is raised or lowered by permeate control means (18a) and/or retentate control means (18b) according to the measured values from retentate stream measuring means (19b) and/or feed stream measuring means (19a).

**10.** Method according to Claim 9,
**characterized**
**in that** before the gas separation plant starts to operate an iterative trial or a process simulation is carried out to determine whether a change in the composition of product stream (8) and/or of feed stream (5) or raw gas stream (17) and/or a change in the flow rate of feed stream (5) and/or raw gas stream (17) can be counteracted by raising or lowering the pressure in the first permeate stream (6) using the permeate control means (18a) and/or the retentate control means (18b).

**11.** Method according to either of Claims 9 and 10,
**characterized**
**in that** control is effected according to one or more of the following prescriptions:

i. when the concentration of a less readily permeating component B of the second retentate stream (8), determined by the retentate stream measuring means (19b), falls below a predetermined setpoint value, the pressure of the first permeate stream (6) is raised or lowered by the permeate control means (18a) and/or the retentate control means (18b) until said concentration is back in the setpoint range,
ii. when the concentration of a less readily permeating component B of the second retentate stream (8), determined by the retentate stream measuring means (19b), rises above a predetermined setpoint value, the pressure of the first permeate stream (6) is raised or lowered by the permeate control means (18a) and/or the retentate control means (18b) until said concentration is back in the setpoint range,
iii. when the volume flow of feed stream (5), determined by the feed stream measuring means (19a), rises, the pressure of the first permeate stream (6) is raised or lowered by the permeate control means (18a) and/or the retentate control means (18b) until the composition or the pressure or the volume flow of the second retentate stream (8), preferably the composition of the second retentate stream (8), is back in the setpoint range,
iv. when the volume flow of feed stream (5), determined by the feed stream measuring means (19a), falls, the pressure of the first permeate stream (6) is raised or lowered by the permeate control means (18a) and/or the

retentate control means (18b) until the composition or the pressure or the volume flow of the second retentate stream (8) is back in the setpoint range,

v. when the concentration of a less readily permeating component B of feed stream (5) or of raw gas stream (17), determined by the feed stream measuring means (19a), rises, the pressure of the first permeate stream (6) is lowered by the permeate control means (18a) and/or the retentate control means (18b) until the composition or the pressure or the volume flow of the second retentate stream (8) is back in the setpoint range,

vi. when the concentration of a less readily permeating component B of feed stream (5) or of raw gas stream (17), determined by the feed stream measuring means (19a), decreases, the pressure of the first permeate stream (6) is lowered by the permeate control means (18a) and/or the retentate control means (18b) until the composition or the pressure or the volume flow of the second retentate stream (8) is back in the setpoint range.

**12.** Method according to any of Claims 9 to 11,
**characterized**
**in that** the pressure drop across the feed stream separation stage (1) is set at from 1 to 30 bar, preferably at from 2 to 20 bar and more preferably at 3 and 10 bar,
and/or
**in that** the pressure drop across the feed stream separation stage (1) and the retentate separation stage (2) is set at from 1 to 100 bar, preferably at from 5 to 80 bar and more preferably at from 10 to 70 bar.

**13.** Method according to any of Claims 9 to 12,
**characterized**
**in that** the driving force used for the separation task is a partial pressure difference between the retentate side and the permeate side in the particular membrane separation stages, wherein the partial pressure difference is generated by a compressor (4), which is arranged on the feed side of the feed stream separation stage (1), and optionally by at least one, preferably one or two vacuum pump(s) in the second and/or third permeate stream (9) and/or (11) and/or by a permeate-side purge gas stream,
and/or
**in that** the pressure of the permeate of the feed stream separation stage (1) is in an equal or elevated state relative to the ambient pressure, so there is still a partial pressure difference between the retentate and the permeate of the permeate separation stage (3) and hence there is a driving force in the event that the permeate of the permeate separation stage (3) is at ambient pressure or negative pressure is applied.

**14.** Method according to any of Claims 9 to 13,
**characterized**
**in that** a controller means adapts the power requirements of the compressor (4), preferably its rotary speed, to changes in the second permeate stream (9) and/or the third retentate stream (10) and/or the raw gas stream (17), wherein the controller means is controlled on the basis of measured values from measuring means in the respective streams,
or
**in that** the method is configured such that changing amounts of recycled gas from the second permeate stream (9) and/or the third retentate stream (10) are equalized, preferably automatically, by a regulation of the supplied amount of raw gas, preferably via a raw gas control means, preferably without changing the rotary speed of the compressor.
or
**in that** the performance of the plant of the present invention is raised or lowered by changing the volume throughput of the compressor (4),
wherein
a resultant change in the concentration of the less readily permeating component B in the second retentate stream (8) is counteracted as per method alternatives (i)/(ii),
and/or
a resultant change in the flow rate of the feed stream (5) is counteracted according to method alternatives (iii)/(iv).

**15.** Method according to any of Claims 9 to 14,
**characterized in that**
the method is practiced in the context of operating a biogas plant and **in that** the rotary speed of the compressor and hence the volume throughput of the compressor (4) is controlled according to the biogas plant fill level, preferably determined via fermenter pressure or intermediate store fill level, in order that the fill level in the fermenter and/or intermediate store may be changed or kept constant,
and/or

the gas mixture used is a mixture which comprises as main constituents carbon dioxide and methane or hydrogen and methane or carbon monoxide and hydrogen or is raw biogas or raw natural gas.

## Revendications

1. Dispositif pour la séparation de gaz, comprenant en tant qu'étapes de séparation sur membrane au moins une étape de séparation d'un courant d'alimentation (1) et une étape de séparation d'un rétentat (2), ainsi qu'au moins un compresseur (4) agencé du côté de l'alimentation de l'étape de séparation du courant d'alimentation (1) et/ou au moins une, de préférence une ou deux, pompes à vide, qui sont agencées de manière à créer une différence de pression partielle entre le côté du rétentat et le côté du perméat de la membrane,
un courant d'alimentation (5) étant introduit dans l'étape de séparation du courant d'alimentation (1), qui est constitué par au moins deux composants et qui correspond au courant de gaz brut (17) ou qui est composé par les gaz du courant de gaz brut (17) et du deuxième courant de perméat recyclé (9),
l'étape de séparation du courant d'alimentation (1) séparant le courant d'alimentation (5) en un premier courant de perméat (6), qui est mis au rebut ou soutiré en tant que deuxième courant de produits ou transformé, et en un premier courant de rétentat (7),
l'étape de séparation du rétentat (2) séparant le premier courant de rétentat (7) en un deuxième courant de perméat (9) et un deuxième courant de rétentat (8), qui est soutiré en tant que produit ou transformé,
**caractérisé en ce que**
le dispositif comprend un appareil de commande du perméat (18a) avec lequel la pression du perméat de l'étape de séparation du courant d'alimentation (1) peut être augmentée ou réduite, et qui est commandé à l'aide de valeurs de mesure d'un ou de plusieurs appareils de mesure du courant d'alimentation (19a) dans le courant d'alimentation (5) et/ou dans le courant de gaz brut (17) et/ou d'un ou de plusieurs appareils de mesure du courant de rétentat (19b) dans le deuxième courant de rétentat (8) .

2. Dispositif pour la séparation de gaz selon la revendication 1, comprenant au moins une étape supplémentaire de séparation du perméat (3),
un courant d'alimentation (5) étant introduit dans l'étape de séparation du courant d'alimentation (1), qui est constitué par au moins deux composants et qui correspond au courant de gaz brut (17) ou qui est composé par les gaz du courant de gaz brut (17), ainsi que du deuxième courant de perméat recyclé (9) et/ou du troisième courant de rétentat recyclé (10),
l'étape de séparation du perméat (3) séparant le premier courant de perméat (6) en un troisième courant de rétentat (10) et un troisième courant de perméat (11), qui est mis au rebut ou soutiré en tant que produit ou transformé, et la pression du perméat de l'étape de séparation du courant d'alimentation (1) pouvant être augmentée ou réduite par un appareil de commande du perméat (18a) dans le premier courant de perméat et/ou par un appareil de commande du rétentat (18b) dans le troisième courant de rétentat (10), et
le ou les appareils de commande du perméat (18a) et/ou le ou les appareils de commande du rétentat (18b) étant commandés à l'aide de valeurs de mesure d'un ou de plusieurs appareils de mesure du courant d'alimentation (19a) dans le premier courant d'alimentation (5) et/ou dans le courant de gaz brut (17) et/ou d'un ou de plusieurs appareils de mesure du courant de rétentat (19b) dans le deuxième courant de rétentat (8).

3. Dispositif selon l'une quelconque des revendications 1 ou 2, **caractérisé en ce qu'**au moins une des étapes de séparation sur membrane (1) à (3) comprend plusieurs modules de membranes de séparation de gaz, qui sont raccordés en parallèle et/ou en série et/ou
le ou les modules de membranes de séparation de gaz comprennent des membranes fibres creuses et/ou des membranes plates.

4. Dispositif selon l'une quelconque des revendications 1 à 3, **caractérisé en ce qu'**un compresseur (4) est présent dans le dispositif, le deuxième courant de perméat (9) et/ou le troisième courant de rétentat (10) étant acheminés du côté de l'aspiration du compresseur (4) pour le retraitement, ou
**en ce qu'**un compresseur à plusieurs étages (4) est présent dans le dispositif, le deuxième courant de perméat (9) et/ou le troisième courant de rétentat (10) étant de préférence introduits entre deux niveaux de compression dans le compresseur (4).

5. Dispositif selon l'une quelconque des revendications 1 à 4, **caractérisé en ce qu'**un compresseur (4) est présent dans le dispositif, et
**en ce que** le compresseur (4) est agencé dans le dispositif de telle sorte qu'il génère une chute de pression dans

l'étape de séparation du courant d'alimentation (1), et/ou
**en ce que** le dispositif comprend un appareil de contrôle, qui adapte la puissance du compresseur (4), de préférence sa vitesse de rotation, à des variations du deuxième courant de perméat (9) et/ou du troisième courant de rétentat (10) et/ou du courant de gaz brut (17), l'appareil de contrôle étant commandé à l'aide de valeurs de mesure provenant d'appareils de mesure dans les courants respectifs.

**6.** Dispositif selon l'une quelconque des revendications 1 à 5, **caractérisé en ce que** des débitmètres sont utilisés en tant qu'appareil de mesure dans le courant d'alimentation (5),
ou
**en ce qu'**un appareil de mesure en ligne ou hors ligne pour la détermination de la composition du mélange gazeux respectif est utilisé dans le deuxième courant de rétentat (8),
et/ou
**en ce qu'**un contrôleur PID est contenu, qui traite les données de l'appareil de mesure du courant de rétentat (19b) et/ou de l'appareil de mesure du courant d'alimentation (19a), et commande l'appareil de commande du perméat (18a) et/ou l'appareil de commande du rétentat (18b).

**7.** Dispositif selon l'une quelconque des revendications 1 à 6, **caractérisé en ce que** des matières synthétiques amorphes ou en partie cristallines sont utilisés en tant que matériaux pour la couche de séparation active des membranes, tels que par exemple, mais pas exclusivement, des polyimides, des polyamides, des polysulfones, des acétates de cellulose et leurs dérivés, des polyoxydes de phénylène, des polysiloxanes, des polymères à microporosité intrinsèque, des membranes à matrice mixte, des membranes à transport facilité, des polyoxydes d'éthylène, des polyoxydes de propylène ou leurs mélanges.

**8.** Dispositif selon la revendication 7, **caractérisé en ce qu'**un polyimide de formule générale

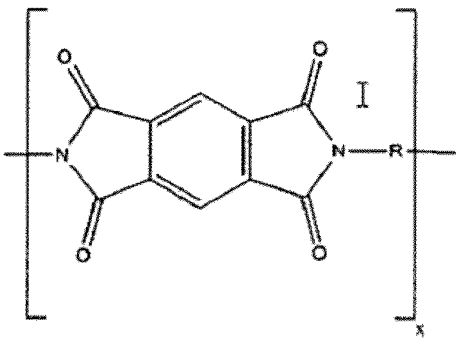

(A)

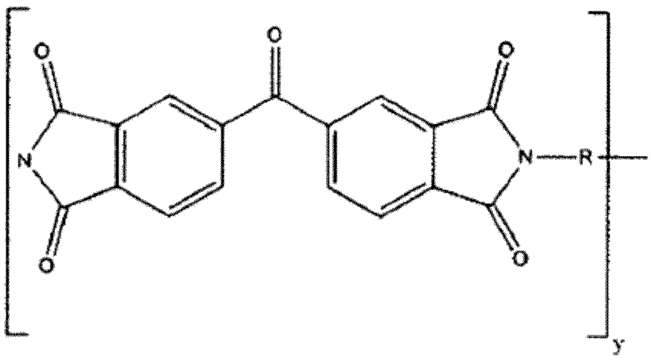

(B)

avec 0 ≤ x ≤ 0,5 et 1 ≥ y ≥ 0,5,
est utilisé en tant que matériau pour la couche de séparation active des membranes,
R correspondant à un ou plusieurs radicaux identiques ou différents choisis dans le groupe constitué par les radicaux L1, L2, L3 et L4

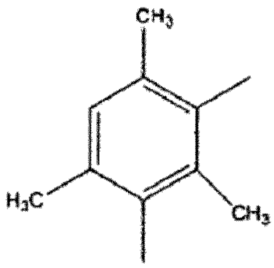

(L1)

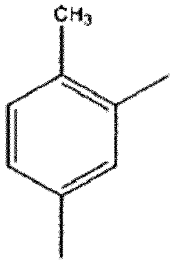

(L2)

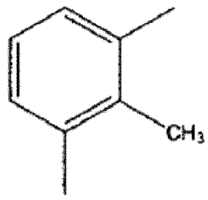

(L3)

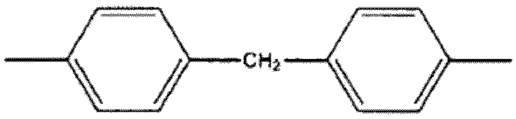

(L4)

**9.** Procédé de commande d'une unité de séparation de gaz selon l'une quelconque des revendications 1 à 8, **caractérisé en ce que**

- avec l'appareil de mesure du courant de rétentat (19b), une variation de la composition du deuxième courant de rétentat (8) et/ou, avec l'appareil de mesure du courant d'alimentation (19a), une variation du débit ou de la composition du courant d'alimentation (5) et/ou du courant de gaz brut (17) sont mesurées, et
- en fonction des valeurs de mesure de l'appareil de mesure du courant de rétentat (19b) et/ou de l'appareil de mesure du courant d'alimentation (19a), une augmentation ou une réduction de la pression dans le premier courant de perméat (6) est réalisée au moyen de l'appareil de commande du perméat (18a) et/ou de l'appareil de commande du rétentat (18b).

**10.** Procédé selon la revendication 9, **caractérisé en ce qu'**avant le début de l'exploitation de l'unité de séparation de gaz, un essai itératif ou une simulation du procédé est réalisé afin de déterminer si une variation de la composition du courant de produits (8) ou du courant d'alimentation (5) ou de gaz brut (17) ou une variation du débit du courant d'alimentation (5) ou de gaz brut (17) peut être contrée au moyen d'une augmentation ou d'une réduction de la pression dans le premier courant de perméat (6) à l'aide de l'appareil de commande du perméat (18a) et/ou de l'appareil de commande du rétentat (18b).

**11.** Procédé selon l'une quelconque des revendications 9 ou 10, **caractérisé en ce que** la commande a lieu selon une ou plusieurs des dispositions suivantes :

i. la concentration d'un composant B perméant plus difficilement du deuxième courant de rétentat (8), déterminée par l'appareil de mesure du courant de rétentat (19b), diminue en dessous d'une valeur de consigne prédéterminée, la pression du premier courant de perméat (6) est augmentée ou réduite au moyen de l'appareil de

commande du perméat (18a) et/ou de l'appareil de commande du rétentat (18b) jusqu'à ce que ladite concentration se situe de nouveau dans la plage de consigne,

ii. la concentration d'un composant B perméant plus difficilement du deuxième courant de rétentat (8), déterminée par l'appareil de mesure du courant de rétentat (19b), augmente au-dessus d'une valeur de consigne prédéterminée, la pression du premier courant de perméat (6) est augmentée ou réduite au moyen de l'appareil de commande du perméat (18a) et/ou de l'appareil de commande du rétentat (18b) jusqu'à ce que ladite concentration se situe de nouveau dans la plage de consigne,

iii. le débit volumique du courant d'alimentation (5), déterminé par l'appareil de mesure du courant d'alimentation (19a), augmente, la pression du premier courant de perméat (6) est augmentée ou réduite au moyen de l'appareil de commande du perméat (18a) et/ou de l'appareil de commande du rétentat (18b) jusqu'à ce que la composition ou la pression ou le débit volumique du deuxième courant de rétentat (8), de préférence la composition du deuxième courant de rétentat (8), se situe de nouveau dans la plage de consigne,

iv. le débit volumique du courant d'alimentation (5), déterminé par l'appareil de mesure du courant d'alimentation (19a), diminue, la pression du premier courant de perméat (6) est augmentée ou réduite au moyen de l'appareil de commande du perméat (18a) et/ou de l'appareil de commande du rétentat (18b) jusqu'à ce que la composition ou la pression ou le débit volumique du deuxième courant de rétentat (8) se situe de nouveau dans la plage de consigne,

v. la concentration d'un composant B perméant plus difficilement du courant d'alimentation (5) ou du courant de gaz brut (17), déterminée par l'appareil de mesure du courant d'alimentation (19a), augmente, la pression du premier courant de perméat (6) est réduite au moyen de l'appareil de commande du perméat (18a) et/ou de l'appareil de commande du rétentat (18b) jusqu'à ce que la composition ou la pression ou le débit volumique du deuxième courant de rétentat (8) se situe de nouveau dans la plage de consigne,

vi. la concentration d'un composant B perméant plus difficilement du courant d'alimentation (5) ou du courant de gaz brut (17), déterminée par l'appareil de mesure du courant d'alimentation (19a), diminue, la pression du premier courant de perméat (6) est réduite au moyen de l'appareil de commande du perméat (18a) et/ou de l'appareil de commande du rétentat (18b) jusqu'à ce que la composition ou la pression ou le débit volumique du deuxième courant de rétentat (8) se situe de nouveau dans la plage de consigne.

**12.** Procédé selon l'une quelconque des revendications 9 à 11, **caractérisé en ce que** la chute de pression dans l'étape de séparation du courant d'alimentation (1) est ajustée de 1 à 30 bar, de préférence de 2 à 20 bar et de manière particulièrement préférée de 3 à 10 bar, et/ou en ce que la chute de pression dans l'étape de séparation du courant d'alimentation (1) et l'étape de séparation du rétentat (2) est ajustée de 1 à 100 bar, de préférence de 5 à 80 bar et de manière particulièrement préférée de 10 à 70 bar.

**13.** Procédé selon l'une quelconque des revendications 9 à 12, **caractérisé en ce qu'**une différence de pression partielle entre le côté du rétentat et le côté du perméat dans les étapes de séparation sur membrane respectives est utilisée en tant que force motrice pour la séparation, la différence de pression partielle étant générée au moyen d'un compresseur (4), qui est agencé du côté de l'alimentation de l'étape de séparation du courant d'alimentation (1), et éventuellement au moyen d'au moins une, de préférence d'une ou de deux pompes à vide dans le deuxième et/ou le troisième courant de perméat (9) et/ou (11) et/ou par un courant de gaz de rinçage du côté du perméat,
et/ou
**en ce que** la pression du perméat de l'étape de séparation du courant d'alimentation (1) est identique ou augmentée en comparaison de la pression ambiante de telle sorte qu'une différence de pression partielle existe encore entre le rétentat et le perméat de l'étape de séparation du perméat (3), et qu'une force motrice existe par conséquent dans le cas où le perméat de l'étape de séparation du perméat (3) est à la pression ambiante ou une sous-pression est appliquée.

**14.** Procédé selon l'une quelconque des revendications 9 à 13, **caractérisé en ce qu'**au moyen d'un appareil de contrôle, la puissance du compresseur (4), de préférence sa vitesse de rotation, est adaptée à des variations du deuxième courant de perméat (9) et/ou du troisième courant de rétentat (10) et/ou du courant de gaz brut (17), l'appareil de contrôle étant commandé par des valeurs de mesure provenant d'appareils de mesure dans les courants respectifs,
ou
**en ce que** le procédé est configuré de telle sorte que des quantités variables de gaz recyclé du deuxième courant de perméat (9) et/ou du troisième courant de rétentat (10), soient compensées, de préférence automatiquement, par une régulation de la quantité de gaz brut introduite, de préférence par un appareil de commande du gaz brut, de préférence sans modifier la vitesse de rotation du compresseur,
ou

**en ce que** la puissance de l'unité selon l'invention est augmentée ou réduite par une modification du volume transporté par le compresseur (4),
une modification ainsi provoquée de la concentration du composant B perméant plus difficilement dans le deuxième courant de rétentat (8) étant contrée selon les variantes de procédé (i) ou (ii)
et/ou
une variation ainsi provoquée du débit du courant d'alimentation (5) étant contrée selon les variantes de procédé (iii) ou (iv).

**15.** Procédé selon l'une quelconque des revendications 9 à 14, **caractérisé en ce qu'**il est réalisé dans le cadre de l'exploitation d'une unité de production de biogaz et **en ce qu'**en fonction du niveau de remplissage de l'unité de production de biogaz, de préférence déterminé par la pression du fermentateur ou le niveau de remplissage d'un dispositif de stockage intermédiaire, la vitesse de rotation du compresseur et par conséquent le volume transporté par le compresseur (4) sont régulés afin de modifier ou de maintenir constant le niveau de remplissage dans le fermentateur et/ou le dispositif de stockage intermédiaire,
et/ou
**en ce qu'**un mélange qui contient en tant que constituants principaux du dioxyde de carbone et du méthane ou de l'hydrogène et du méthane ou du monoxyde de carbone et de l'hydrogène ou un biogaz brut ou un gaz naturel brut est utilisé en tant que mélange gazeux.

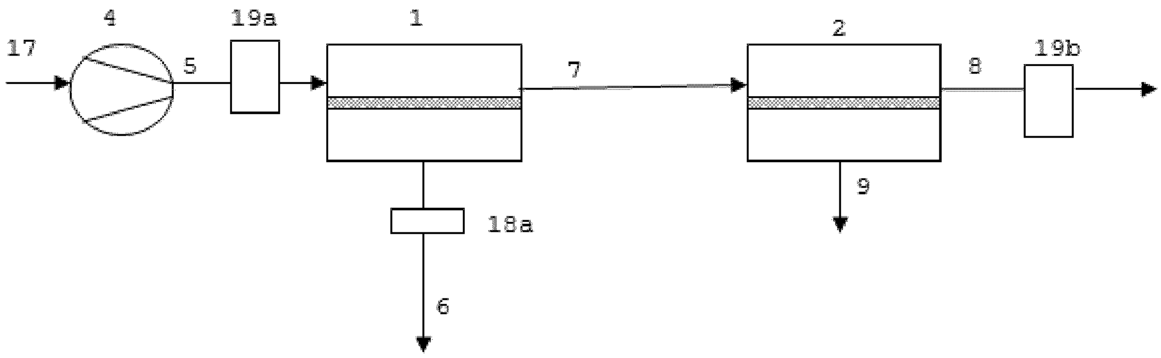


Abbildung 1

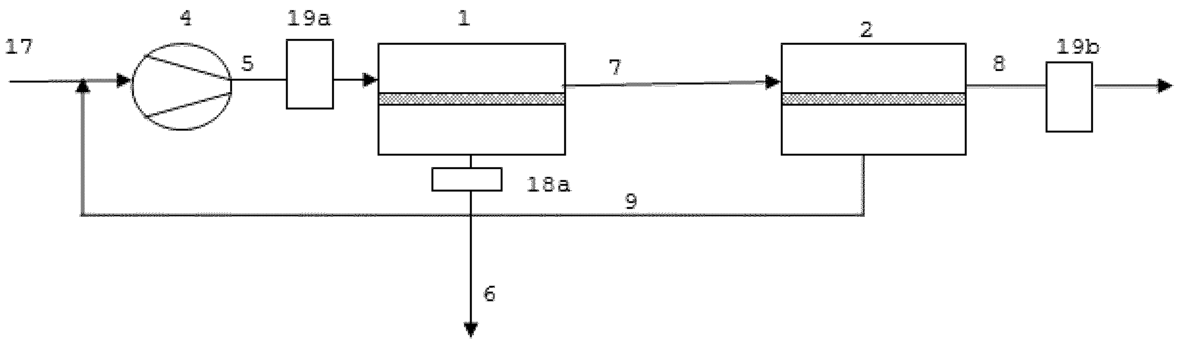


Abbildung 2

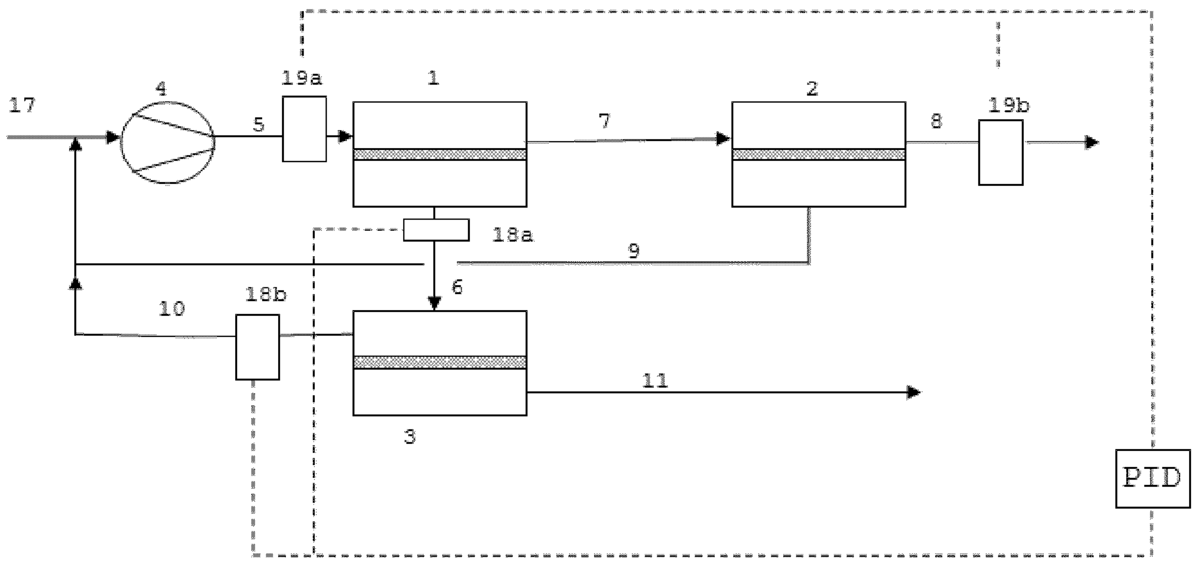


Abbildung 3

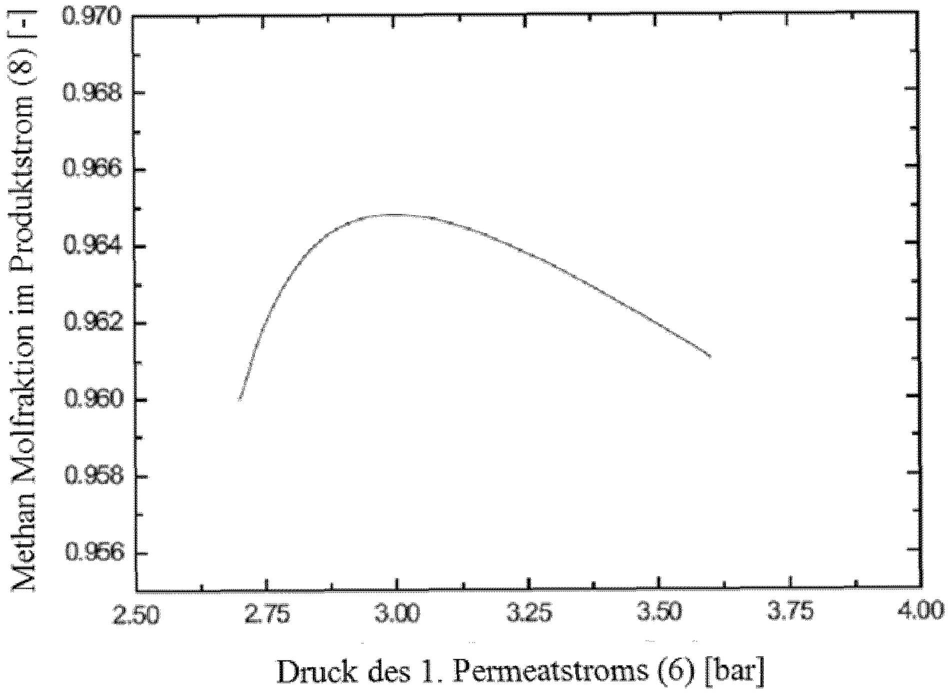


Abbildung 4a

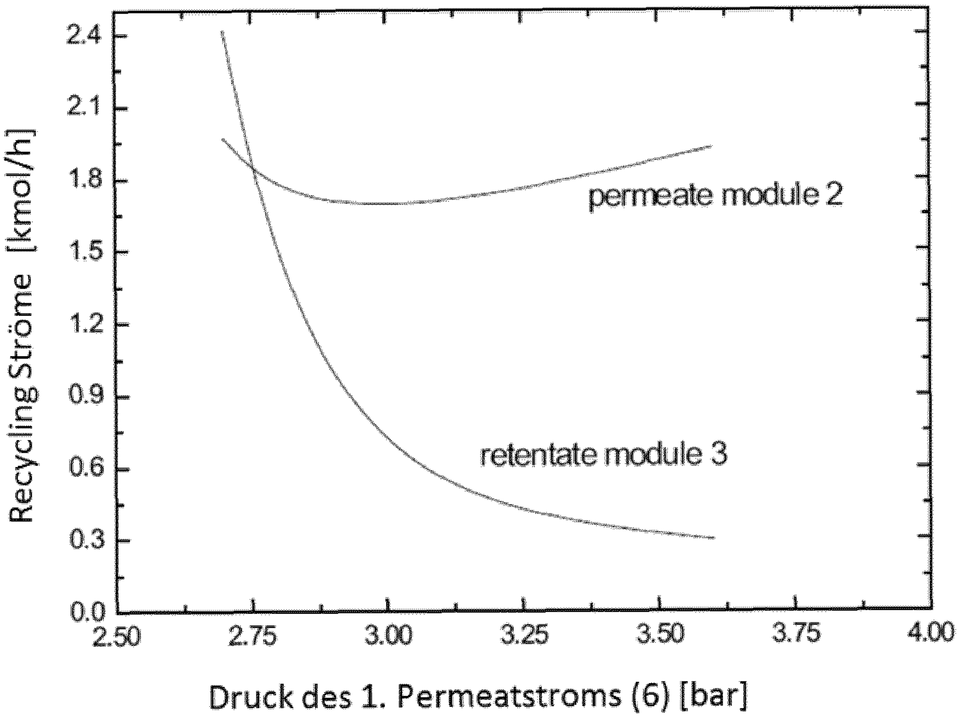


Abbildung 4b

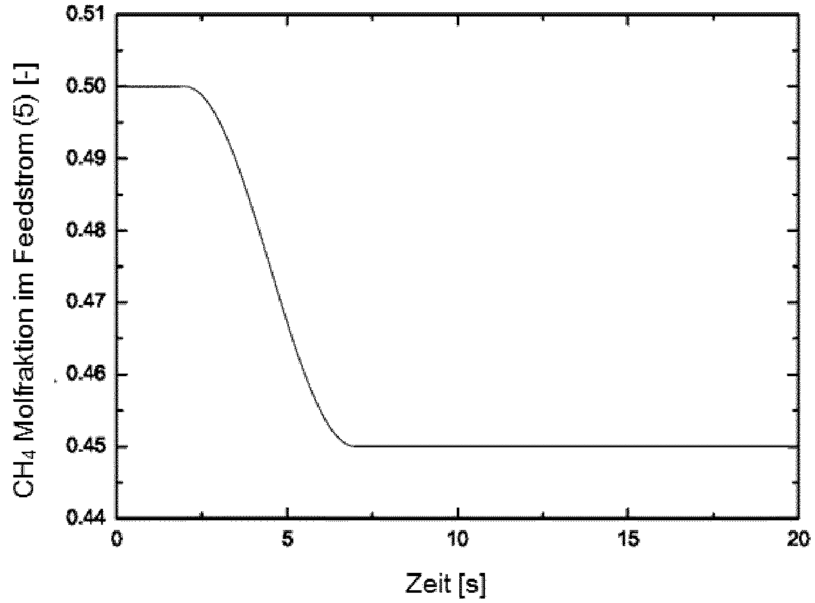


Abbildung 5a

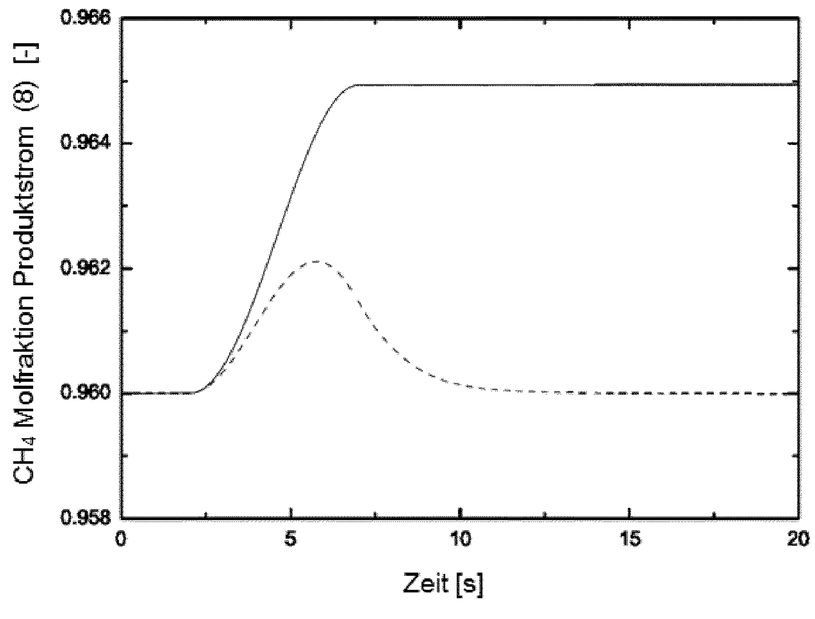


Abbildung 5b

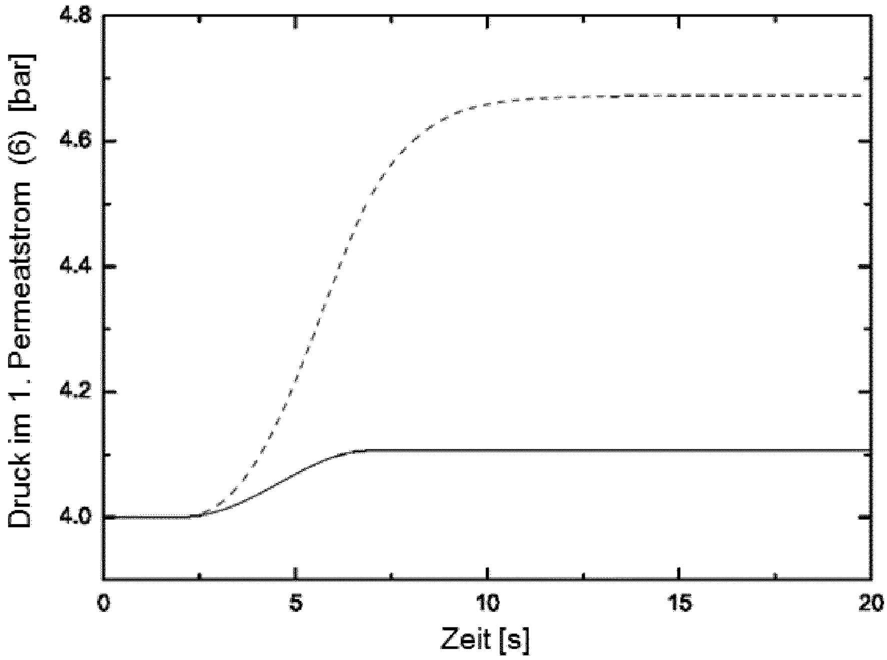


Abbildung 5c

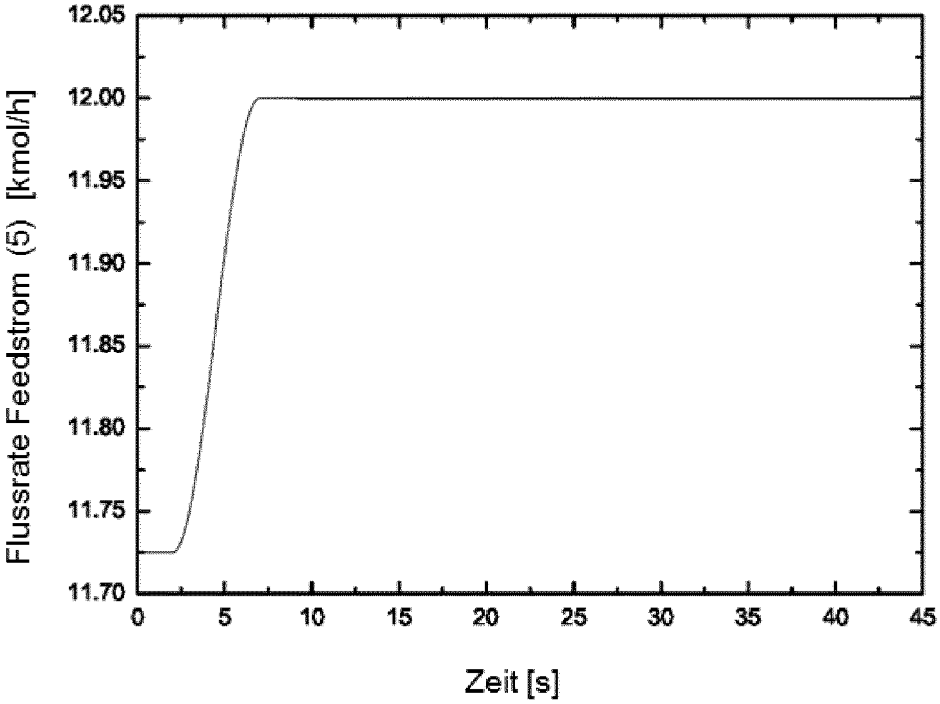


Abbildung 6a

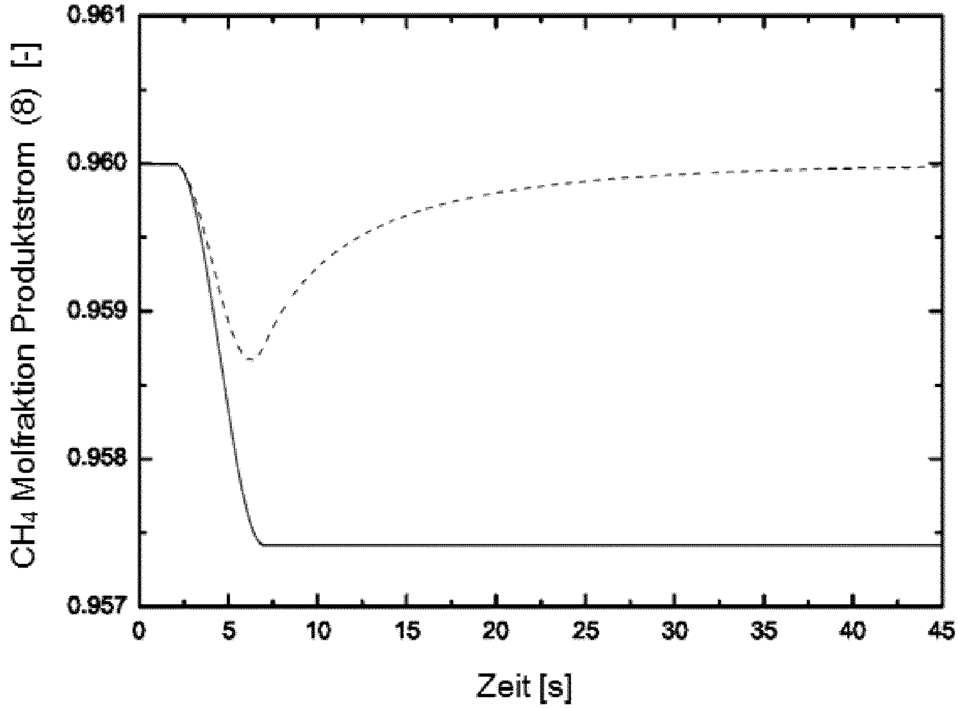


Abbildung 6b

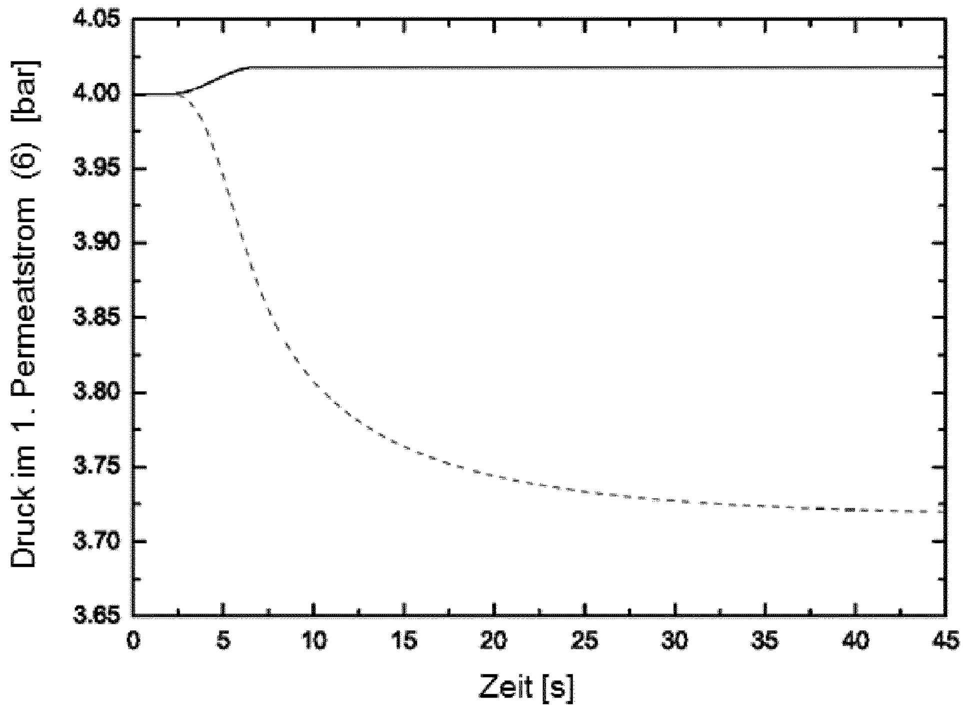


Abbildung 6c

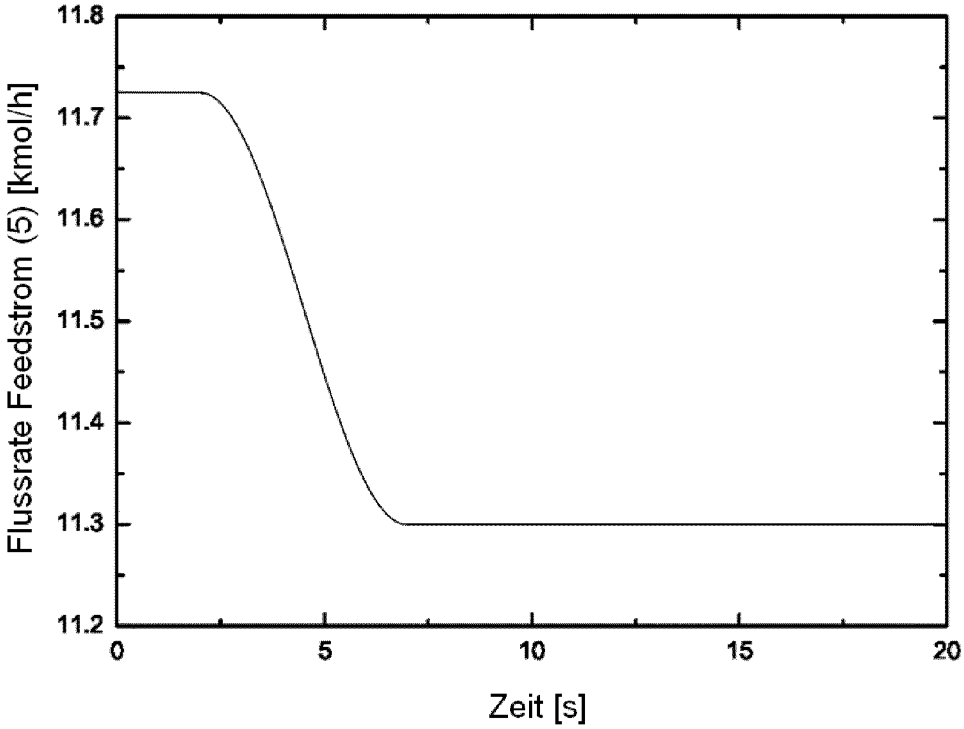


Abbildung 7a

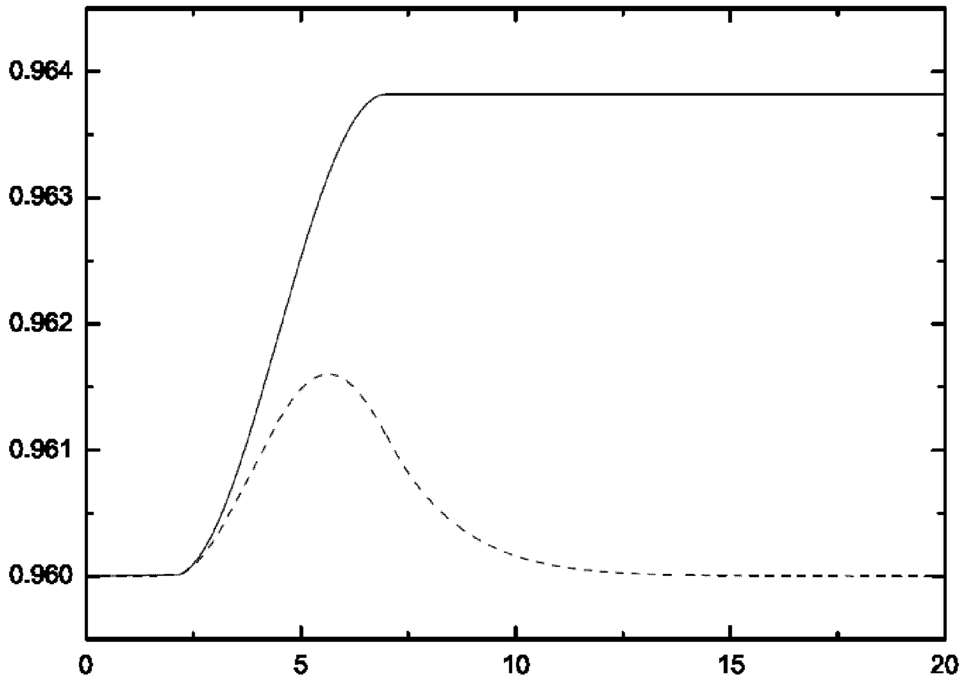


Abbildung 7b

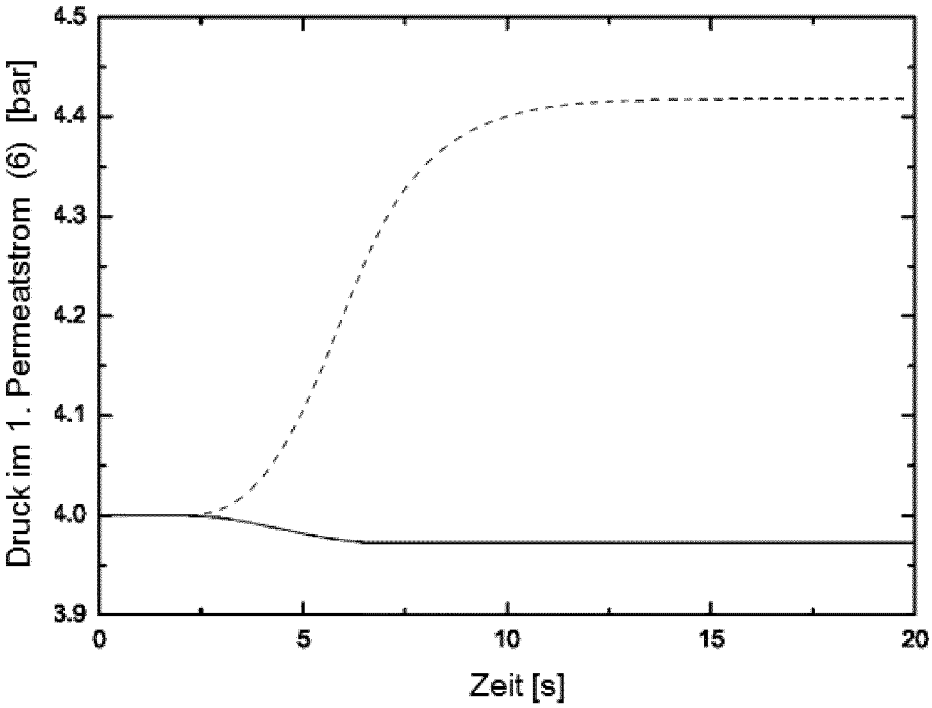


Abbildung 7c

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012000727 A
- US 6565626 B
- US 6168649 B
- EP 1324815 A
- US 4806132 A
- US 5281253 A
- WO 2011009919 A1


### In der Beschreibung aufgeführte Nicht-Patentliteratur


- **SCHOLZ et al.** Modeling gas permeation by linking non-ideal effects. *Industrial & Engineering Chemistry Research angewendet*